# EUROPEAN PATENT APPLICATION

(11) **EP 1 591 912 A1**
(43) Date of publication of application: **02.11.2005**
(21) Application number: 04701692.8
(22) Date of filing: 13.01.2004
(51) Int. Cl.: G06F 15/00

(54) **SYSTEM, METHOD, AND PROGRAM FOR USING OR MANAGING CONTENT**

(30) Priority: 14.01.2003 JP 2003005600
(71) Applicant: MATSUSHITA ELECTRIC INDUSTRIAL CO., LTD., Kadoma-shi, Osaka 571-8501 (JP)
(72) Inventor: NAKAHARA Tohru, Osaka-shi, Osaka 532-0022 (JP); YAMAMOTO Masaya, Osaka 573-1151 (JP); INOUE Mitsuhiro, Osaka-shi, Osaka 555-0011 (JP); TOKUDA Katsumi, Osaka 563-0038 (JP)
(74) Representative: Pautex Schneider, Nicole Véronique
(86) International application number: PCT/JP2004/000138
(87) International publication number: WO 2004/063933

(57) **Abstract**

A system comprising a terminal apparatus (300) which uses a content and a license generation server (100) which manages the use, wherein the license generation server (100) includes rights generation units (10A, 10B) operable to generate use condition information which indicates use conditions for the content by corresponding respectively to a plurality of rights management methods which has a different method of managing rights for using a content; a content key storing unit (103) operable to store a content key; and a license generation unit (102) operable to generate license information from the use condition information and the content key, and the terminal apparatus (300) includes rights interpretation units (30A, 30B) operable to judge a use permission of the content under the plurality of rights management methods based on the use conditions indicated in the license information, and content use units (321a, 321b) operable to use the content according to the judgement result.

## Description

### BACKGROUND OF THE INVENTION

### (1) Field of the Invention

The present invention relates to a system for distributing a license for digital contents such as video and music from a server apparatus via communication and broadcasting, and enabling a user to use the digital contents based on the license at a terminal apparatus, especially a content use management system which is able to extend use control for contents.

### (2) Description of the Related Art

In recent years, a system called a content distribution system is in the stage of practical use, the content distribution system being allowed to distribute digital contents such as music, video, game and the like (hereafter referred to as content) from a server apparatus to terminal apparatuses via communication such as the Internet, digital broadcasting and the like, and use the contents at the terminal devices.

In commonly used content distribution systems, copy right protection technique is used so as to protect copy rights of digital contents and prevent unauthorized use of contents by malicious users and the like. Specifically, copy right protection technique is a technique for securely controlling use of content as in the case where a user reproduces a content or copies it on a recording medium using an encryption technique or the like.

For example, a system is suggested as an example for a content distribution system, the system comprising a server apparatus which generates a license including partial use conditions such as the number of reproductions of an available content at a terminal apparatus and distributes the license to the terminal apparatus, and the terminal apparatus which controls the use of content according to an logical add (OR) and AND operation of the partial use conditions (refer to Japanese Laid-Open Patent application No. 2000-293439).

However, conventional content distribution systems have following problems. In here, the problems are explained defining a method for realizing copyright protection for contents using a copyright protection technique as a rights management method.

The first problem is that a method for controlling use of content at a terminal apparatus has not been known, the method being used for controlling by which a plurality of rights management methods works in cooperate with each other or coexists. Specifically, a method has not been known, the method being used for controlling use of content at a terminal apparatus by which a rights management method A developed by Maker α works in cooperation with a rights management method B developed by Maker β in a service by a provider δ which manages a content distribution system. In other words, only one type of rights management systems is assumed to exist under the conventional rights management method. Therefore, the conventional rights management method does not function in an environment where the plurality of rights management methods exists.

The second problem is that a functional change is required, the functional change being required in two processing units at a terminal apparatus when pre-existed content use control information is extended on a rights management method, the two processing units being a license interpretation unit which interprets a license and a use permission judgement unit which judges whether or not a content is permitted for use. Specifically, it becomes necessary to add a use time interpretation function to the license interpretation unit and a use permission judgement function based on a use time to the use permission judgement unit at a terminal apparatus when the content use time information is added to a rights management method which controls the number of times that the content is used. That is the conventional method requires many functional additions and changes in a processing unit at a terminal apparatus to extend use control information of the contents. Therefore, it is difficult substantially for the conventional rights management method to extend use control information lacking extensibility.

### SUMMARY OF THE INVENTION

The present invention for solving such conventional problems aims to provide a content use management system which realizes a content use control at a terminal apparatus based on a plurality of rights management methods and has flexibility and extensibility which do not require functional changes of a use permission judgement unit in the case of where the use control information by the terminal apparatus is extended.

To solve above mentioned requirements, the content use management system according to the present invention comprises a terminal apparatus and a server apparatus that is connected to the terminal apparatus through a communication channel, the terminal apparatus using a content which is a digital copyrighted work, and the server apparatus managing the use of said content by the terminal apparatus, wherein the server apparatus includes: a use condition generation unit operable to generate use condition information which indicate use conditions for a content, by associating said use condition information respectively with a plurality of rights management methods which has a different method of managing rights for using said content; a content key storing unit operable to store a content key which is required for the terminal apparatus to use said content; a license generation unit operable to generate license information based on the use condition information generated by the use condition generation unit and the content key stored in the content key storing unit, the content key being associated with said use condition information, the license information indicating a license for permitting the use of said content corresponding to the content key under the use conditions indicated in said use condition information; a license distribution unit operable to distribute the generated license information to the terminal apparatus, and the terminal apparatus includes: a license storing unit operable to obtain the license information distributed from the server apparatus and store the license information; a use condition judgement unit operable to judge whether or not the use of a content indicated in the license information is permitted based on the use conditions indicated in the license information stored in the license storing unit; a content use unit operable to decrypt said content with the content key included in the license information and use said content according to the use conditions included in the license information when it is judged by the use condition judgement that the use of said content is permitted; and a use condition update unit operable to update, when said content is used by the content use unit, the use conditions in association with said use, the use conditions being indicated in the license information stored in the license storing unit. That is, the server apparatus issues license information corresponding to the plurality of rights management methods.

Distinguishing a rights management method, for example, the license generation unit generates the license information that include a rights management identifier for identifying a rights management method corresponding to the use condition information, the use condition judgement unit judges whether or not the use of said content is permitted according to the rights management method indicated by the rights management identifier included in the license information, and the use condition update unit updates the use conditions according to the rights management method indicated by the rights management identifier included in the license information.

Accordingly, under an environment where the plurality of rights management methods are mixed, the terminal apparatus can reproduce contents such as video and music according to the license information issued by the server apparatus. That is, the terminal apparatus can provide various types of contents to a user in an environment where many content vendors are mixed, while protecting copyrights of digital contents.

Note that, in specific, the different rights management methods means that use condition information indicating information of rights for using a content, a physical data structure of license information (length of data, alignment, encryption method etc.) and the interpretation method (expression method, a method of associating a bit pattern and a meaning etc.) are different.

In here, the use conditions generation unit may generate a plurality of use condition information items, for a same content, corresponding respectively to the plurality of rights management methods. Then, the use condition information includes use availability information which indicates a permitted extent of use of a content, and the use condition generation unit generates the plurality of use availability information items to avoid a duplication of a same kind of use availability information items in the plurality of use condition information items when the use condition generation unit generates, for the same content, the plurality of use condition information items corresponding respectively to the plurality of rights management methods. Also, the use condition generation unit may generate the plurality of use condition information items including a same kind of use availability information items duplicated in the plurality of use condition information items when the use condition generation unit generates, for the same content, the plurality of use condition information items corresponding respectively to the plurality of rights management methods.

For example, the system can be realized as a system which allows to have a duplication of same type (here indicates a number of times) of use availability information in the license information for one music content or as a system which does not allow to have a duplication, the duplication being as that a rights management method A permits 10 times of reproduction and the rights management method B permits 8 times of reproduction the license information for one music content.

In the system which allows to have a duplication of use availability information, for example, the license generation unit generates the license information by including control identification information in the license information, the control identification information indicating a computation method for the case where the plurality of judgement results for the use permission regarding the same content is obtained, and the use condition judgement unit i ) generates a plurality of judgement results by judging whether or not the use of said content is permitted based respectively on the plurality of use availability information items, and ii ) judges whether or not the use of said content is permitted by performing the computation method indicated in the control identification information to the generated plurality of judgement results, when the plurality of use condition information items in the license include a duplication of a same kind of use availability information items regarding the same content.

Further, the present invention can be realized not only as such content use management system but also as a server apparatus and a terminal apparatus which constitutes a system, as a content use management method and a content use method having distinctive steps constituting those systems and apparatuses, and as a recording medium in which stores programs including those steps and programs.

As above described, according to the present invention, the use of content at the terminal apparatus can be controlled in a condition of linking a plurality of rights management methods. In other words, under an environment of mixing the plurality of rights management methods, a user can use an integrated content distribution service.

In addition, in the case of where control items of the use of a content at the terminal apparatus are extended, the content use management system only can change or add a rights interpretation unit capable of interpreting control items to be extended at the terminal apparatus. Therefore, it becomes easier to extend control items of the use of the content.

Accordingly, the present invention can realize a rights management and a copyright protection being flexible and extensible in accordance with various service forms and business forms. As a result, a remarkable development of digital content distribution service can be expected.

### BRIEF DESCRIPTION OF THE DRAWINGS

FIG. 1 is a diagram showing an overall schematic structure of a content distribution system S according to the embodiments of the present invention.
FIG. 2 is a functional block diagram showing structures of a license generation server, a content distribution server and a terminal apparatus according to the embodiments of the present invention.
FIG. 3 is a diagram showing a table structure of a user information storing unit according to the embodiments of the present invention.
FIG. 4A and 4B are diagrams showing table structure of a use condition storing unit and a table structure of the use condition storing unit according to the embodiments of the present invention.
FIG. 5 is a diagram showing a table structure of a content key storing unit according to the embodiments of the present invention.
FIG. 6 is a diagram showing a content storing unit and a table structure of the content storing unit according to the embodiments of the present invention.
FIG. 7 is a diagram showing a table structure of a license storing unit according to the embodiments of the present invention.
FIG. 8 is a diagram showing a structure of a license according to the embodiments of the present invention.
FIG. 9 is a diagram showing a table structure of data which stores a rights management method corresponding with a service held by a control unit according to the embodiments of the present invention.
FIG. 10 is a diagram showing a structure of a communication message according to the embodiments of the present invention.
FIG. 11 is a diagram showing a structure of a license request message body according to the embodiments of the present invention.
FIG. 12 is a diagram showing a structure of a use condition request message body according to the embodiments of the present invention.
FIG. 13 is a diagram showing a structure of a license send message body according to the embodiments of the present invention.
FIG. 14 is a diagram showing a structure of a license send message body according to the embodiments of the present invention.
FIG. 15 is a diagram showing a structure of a use condition judgement request message body according to the embodiments of the present invention.
FIG. 16 is a diagram showing a structure of a judgement result send message body according to the embodiments of the present invention.
FIG. 17 is a diagram showing a structure of a use control message body according to the embodiments of the present invention.
FIG. 18 is a diagram showing a structure of a use information send message body according to the embodiments of the present invention.
FIG. 19 is a diagram showing a structure of a use conditions update request message body according to the embodiments of the present invention.
FIG. 20 is a diagram showing a structure of an updated use condition send message body according to the embodiments of the present invention.
FIG. 21 is a diagram showing an example of a license according to the first embodiment of the present invention.
FIG. 22 is a diagram showing an example of a license according to the second embodiment of the present invention.
FIG. 23 is a diagram showing an example of a license according to the first embodiment of the present invention.
FIG. 24 is a diagram showing a structure of a content request message body according to the embodiments of the present invention.
FIG. 25 is a diagram showing a structure of a content send message body according to the embodiments of the present invention.
FIG. 26 is a flowchart showing a process that the terminal apparatus according to the embodiments of the present invention obtains encrypted content from a content distribution server.
FIG. 27 is a flowchart showing a process that the terminal apparatus according to the embodiments of the present invention obtains a license from a license generation server.
FIG. 28 is a flowchart showing a process that the terminal apparatus according to the embodiments of the present invention starts the use of content.
FIG. 29 is a flowchart showing a process that the terminal apparatus according to the embodiments of the present invention ends the use of content.
FIG. 30 is a diagram showing a structural example of the content distribution system in which rights management methods provided by a plurality of manufactures exist together.
FIGS. 31A ~ 31C are diagrams showing license information for explaining a case where a rights management method provided by a maker is extended and items controllable at the terminal apparatus are added and changed.

### DESCRIPTION OF THE PREFERRED EMBODIMENT(S)

### (First Embodiment)

Following explains in detail about the first embodiment according to the present invention with reference to diagrams.

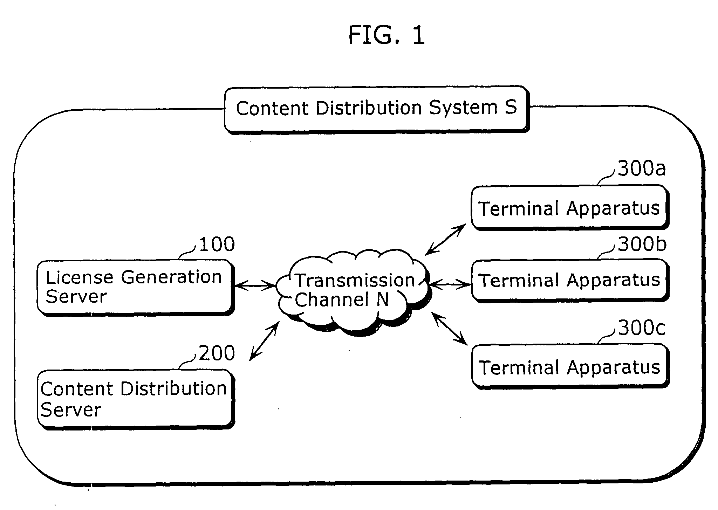

FIG. 1 is a diagram showing an overall schematic structure of a content distribution system S according to the present embodiments.

The content distribution system S is a system for a user to use a content at a terminal apparatus with a content distributed from a content distribution server via a transmission channel such as package media and with a license distributed from a license generation server, the system comprising a license generation server 100 which generates and distributes a license, a content server 200 which distributes contents, terminal apparatuses 300a~300c which use the contents, and a transmission channel N which mutually connects those servers to apparatuses.

The license generation server 100 is a server apparatus which manages content use conditions held by a user and gives the user a license for contents, the server apparatus being managed by a service business entity δ for providing a content distribution service. In addition, a rights management is performed based on a rights management method A provided by Maker α and a rights management method B provided by Maker β , the rights management controlling use of content at the content distribution service .

Specifically, the license generation server 100 (1) manages content use conditions for respective rights management method, the content use conditions being held by each user or each terminal apparatus 300a~300c, (2) generates a license according to a request by a user, and (3) distributes the license to the terminal apparatuses 300a~300c via the transmission channel N. It is also possible in a push type distribution format such as digital broadcasting and broadband broadcasting to use a content by distributing a temporally revoked license together with the content and validating the license through an billing process at the terminal apparatuses 300a~300c.

Note that the license is data made up with a decryption key (content key) for decrypting an encrypted content and information relating to content use control.

In the case where data such as license are sent and received between the license generation server and the terminal apparatuses 300a~300c via the transmission channel N, the data is sent and received after establishing a Secure Authenticated Channel (hereafter referred to as SAC) to ensure security. A data structure of a license is explained later in detail with reference to diagrams.

Further, it is general that common key encrypted algorithms such as AES (Advanced Encryption Standard) and DES (Data Encryption Standard) are used for an encryption algorithm which encrypts contents managed by the content distribution server 200.

The content distribution server 200 is a server apparatus for distributing contents to the terminal apparatus 300a~300c via a transmission channel N, the server apparatus being realized by a workstation and the like. Specifically, the content distribution server 200 sends contents digitally compressed by a compression method such as MPEG-2 (Moving Picture Experts Group) and MPEG-4, and encrypted, if necessary, by AES, Triple DES and the like.

For example, in the case of the Internet, the content distribution server 200 can be a server apparatus for streaming contents using protocols such as RTP (Realtime Transfer Protocol)/UDP (User Datagram Protocol) and a server apparatus for providing download contents using protocols such as FTP (File Transfer Protocol) and HTTP (Hyper Text Transfer Protocol).

In the case of digital broadcasting, the content distribution server 200 can be a let-off apparatus for providing stream type contents by MPEG-2 TS (Transport Stream) and a let-off apparatus for providing accumulation type contents based on a data carousel transmission method indicated by ARIB (Association of Radio Industries and Businesses) STD-B24 and the like.

Note that in the present embodiment, the content distribution server 200 is explained as a server apparatus for providing download contents.

The transmission channel N is a network for connecting the license generation server 100, the content distribution server 200, and the terminal apparatuses 300a~300c one another. For example, the transmission channel N is a communication network such as the Internet, digital broadcasting, or a network compounding those networks.

The terminal apparatuses 300a~300c includes a function of connecting to the transmission channel N, the terminal apparatuses having a monitor display on which a user uses contents, and writing out contents onto a recording medium. Specifically, the terminal apparatuses 300a~300c are content display apparatuses, recorders, such as STE (Set Top Box) for receiving digital broadcasting, a digital TV, DVD (Digital Versatile Disc) recorder, HDD (Hard Disk Drive) recorder and PC (Personal Computer), or compound apparatuses which compounds these apparatuses and the recorders.

Next, a content obtainment process, a license obtainment process, and content use termination process at a terminal apparatus are explained when use of content at a terminal apparatus is controlled in the content distribution system S by which a plurality of rights management methods, based on a rights management method A provided by Maker α and a rights management method B provided by Maker β , functions together or coexists.

Here, proceeding to an explanation, identifiers according to the present embodiments are defined.

A user identifier is information for uniquely specifying a user in the content distribution system S.

A terminal identifier is information for uniquely specifying a terminal apparatus 300 in the content distribution system S. In the present embodiments, the terminal identifier of a terminal apparatus 300 is explained as "TERMINAL-ID-0001".

A content identifier is information for uniquely specifying contents in the content distribution system S.

A rights management identifier is information for uniquely specifying a rights management method in the content distribution system S. The present embodiment explains a rights management identifier corresponding to a rights management method A as "100A" and a rights management identifier corresponding to a rights management method B as "100B"

Other identifiers and specific values of the identifiers are defined and explained where it is appropriate and necessary.

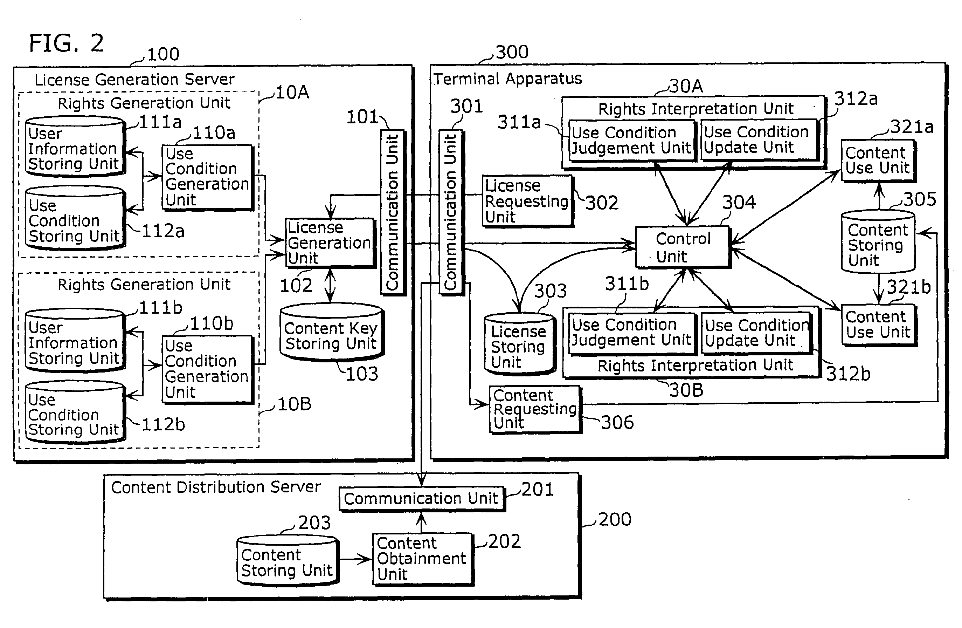

FIG. 2 is a functional block diagram showing detailed configurations of the license generation server 100, the content distribution server 200, and the terminal apparatus 300 shown in FIG. 1. In FIG. 2, the terminal apparatus 300 represents a functional configuration of the terminal apparatuses 300a~300c and is graphically represented as the terminal 300.

Firstly, a detailed configuration of the license generation server 100 is explained. The license generation server 100 is formed of a communication unit which communicates with the terminal apparatus 300, a license generation unit 102 which generates a license from use conditions and a content key, a content key storing unit which stores the content key, as a plurality of rights generation units which generate use conditions, a rights generation unit 10A corresponding to the rights management method A, and a rights generation unit 10B corresponding to the rights management method B.

Here, the rights generation unit is set for respective rights management method, the each rights generation unit including a use condition generation unit, a user information storing unit, and a use condition storing unit. Moreover, in here, the rights generation unit 10A is explained as a representative of the rights generation units. The rights generation unit 10A is formed of a use condition generation unit 110a which generates use conditions according to the rights management method A, a user information storing unit 111a which stores user information, and a use condition storing unit 112a which stores use conditions.

Next, a detailed configuration of the content distribution server 200 is explained.

The content distribution server 200 is formed of a communication unit 201 which communicates with the terminal apparatus 300, a content obtainment unit 202 which obtains encrypted contents from the content storing unit 203, a content storing unit 203 which stores the encrypted contents.

Finally, a detailed configuration of the terminal apparatus 300 is explained.

The terminal apparatus 300 is formed of a communication unit 301 which communicates with the license generation server 100 and the content distribution server 200, a license requesting unit 302 which requests the license generation server 100 for obtaining a license, a license storing unit 303 which stores the license obtained from the license generation server 100, a control unit 304 which performs a control for judging whether a content is permitted for use according to the license and a control for updating the license after the content is used, a content storing unit 305 which stores the encrypted contents obtained from the content distribution server 200, a content requesting unit 306 which generates a content request message and requests the content distribution server 200 for obtaining a content, as a plurality of rights interpretation units which performs interpretations and update process of use conditions included in a license, a rights interpretation unit 30A corresponding to the rights management method A, a rights interpretation unit 30B corresponding to the rights management method B, and content use units 321a and 321b which use the contents.

Here, the rights interpretation unit is set for each rights management method, including respectively a use condition judgement unit and the use condition update unit. In here, it is explained the rights interpretation unit 30A as a representative of the rights interpretation units. The rights interpretation unit 30A includes a use condition judgement unit 311a which judges whether a content is permitted for use according to the obtained use conditions, and a use condition update unit 312a which performs update process for the obtained use conditions.

Each server and terminal apparatus 300 is formed of various data storing units and processing units. The various data storing units are realized in a recording medium such as HDD, and the various processing units are realized by a program and the like which executed by hardware such as LSI, or CPU, RAM, ROM and the like.

In here, data structures of data dealt in the present embodiments are explained. Firstly, a data structure of a license is explained and data structures of data held in various data storing units in the license generation server 100, the content distribution server 200, and the terminal apparatus 300 are explained in order of mention.

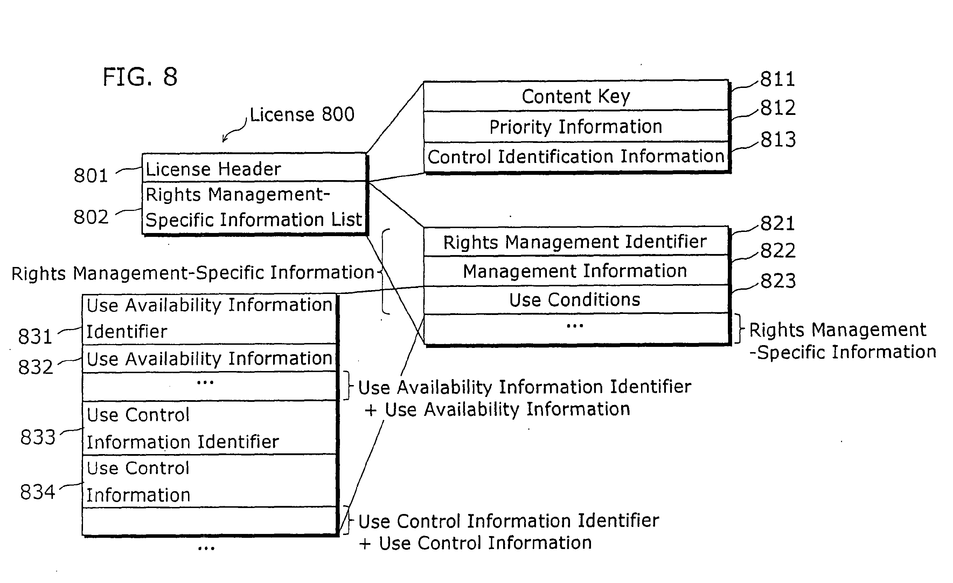

First, a data structure of a license is explained with reference to FIG. 8. A license 800 is formed of a license header 801 which includes information given to a license as a whole, rights management-specific information list 802 which is given to each rights management method.

The license header 801 includes a content key 811 for decrypting an encrypted content corresponding to the license 800, priority information 812 for setting a priority for the case where a use availability judgement and use conditions updating control are performed at the terminal apparatus 300, and control identification information 813 for specifying a control method for the case where a use availability judgement and use conditions updating control at the terminal apparatus 300 are performed. Note that the license 800 needs to be associated with a content identifier in a process relating to the license storing unit 303 and a license, and may include the content identifier in a license header 801 for removing the process of associating the license 800 with the content identifier at the terminal apparatus 300.

The rights management-specific information list 802 is formed of a plurality of information specific to each management method, the information for each management method including a rights management identifier 821, management information 822 which sets information such as valid or invalid of use conditions, and use conditions 823.

The use conditions 823 is formed of a list of pairs with use availability information 832 which affects a judgement on a content use availability and a use availability information identifier 831 for uniquely specifying an item of the use availability information in the content distribution system S, and a list of pairs with use control information 834 which affects a use control and an identifier for use control information 833 for uniquely specifying an item of the use control information 834.

Here, the use availability information 832 includes the number of available times for the content to be used, for example, "10 times", a validity period of a targeted content, for example, "12/1/2002~2/13/2003" and the like. In addition, the use availability information 832 includes, when a license is updated at a terminal apparatus 300, changeable use availability information which has a possibility of value changes and unchangeable use availability information which does not change values. Here, the number of available times for the content to be used is changeable use availability information to be updated even after the content is used and the validity period is unchangeable use availability information not to be updated after the content is used.

The use control information 834 is information for specifying an image quality at the time of content to be reproduced ("HD (High Definition)" or "SD (Standard Definition)"), information for specifying an audio channel ("5.1ch reproduction" or "2ch reproduction"), and the like. Note that the use control information 834 is unchangeable value not to be updated at a terminal apparatus 300 even after the content is used.

The license 800 according to the present embodiments has a structure which permits a duplication of items of changeable use availability information under the use conditions 823 for information for each rights management on the rights management-specific information list 802. Therefore, when there are same changeable items of the use availability information 832 by a plurality of rights management methods, in other words, when controlling the same changeable items of the use availability information 832 by the plurality of rights management methods, changeable items of the use availability information is set on use conditions for information of respective rights management.

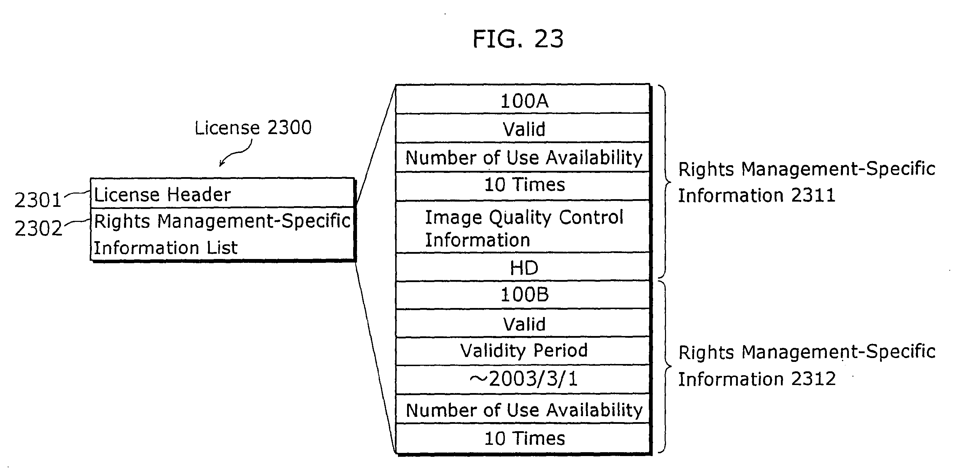

Specifically, a license 2300 generated by the rights management method A which manages "the number of use availability" and "image quality control information", and the rights management method B which manages "the number of use availability" and "validity period" is explained with reference to FIG. 23.

As shown in FIG. 23, a rights management-specific information list 2302 in the license 2300 includes rights management-specific information 2311 and rights management-specific information 2312. On the rights management-specific information 2311, "100A" is set as a rights management identifier for identifying it as the rights management method A, "the number of use availability" and "image quality control information" that are use availability information managed by the rights management method A are set for the use availability information. On the other hand, on the rights management-specific information 2312, a rights management identifier "100B" is similarly set and "validity period" and "the number of use availability" are set for the use availability information. The "number of use availability" as changeable use availability information is set both on the rights management-specific information 2311 and the rights management-specific information 2312 having a structure to permit a duplication of items of changeable use availability information.

Next, data held in each storing unit of the license generation server 100 are explained with reference to diagrams.

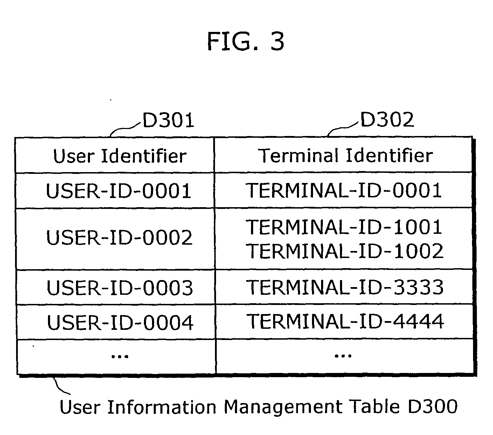

The user information storing unit 111a is a database which has a user information management table for managing information relating to a user, the user information storing unit 111a being used for associating a terminal apparatus 300 which accesses to the license generation server 100 with a user which holds content use conditions managed at the use condition storing unit 112a. Specifically, the user information storing unit 111a has a user information management table D300 shown in FIG. 3 and manages a user identifier D301 and a terminal identifier D302.

For example, FIG.3 indicates that a user whose user identifier D301 is "USER-ID-0001" has a terminal apparatus 300 whose terminal identifier D302 is "TERMINAL-ID-0001". Also, it indicates that a user whose user identifier is "USER-ID-0002" has two terminal apparatuses 300 whose terminal identifiers D302 are "TERMINAL-ID-1001" and "TERMINAL-ID-1002", which allows to access to the license generation server 100 from both terminal apparatuses 300.

Note that a data registration to the user information storing unit 111a is performed when a user registers his/her membership for receiving services provided by a service provider. The member registration process can be performed (1) online for a user by connecting, via the transmission channel N, to a website of Maker α who provides a rights management method A and registering his/her membership from a member registration screen, or (2) offline by using a postcard for a member registration and the like.

In the member registration process, a service provider firstly assigns the user identifier D301 to a user. Then, the terminal identifier D302 of the terminal apparatus 300 held by the user is notified to the service provider online or offline. Therefore, the user identifier D301 and the terminal identifier D302 are associated with each other and registered to the user information management table D300 in the user information storing unit 111a. As a result of above mentioned member registration process, the user information table D300 is constructed.

The use condition storing unit 112a corresponding to the rights management method A is a database for managing use conditions for contents by every user, the use condition storing unit 112a being used, in response to a license obtainment request from the terminal apparatus 300, for judging whether or not the use conditions held by a user are permitted for issuing, and generating the use conditions when the issuing is permitted.

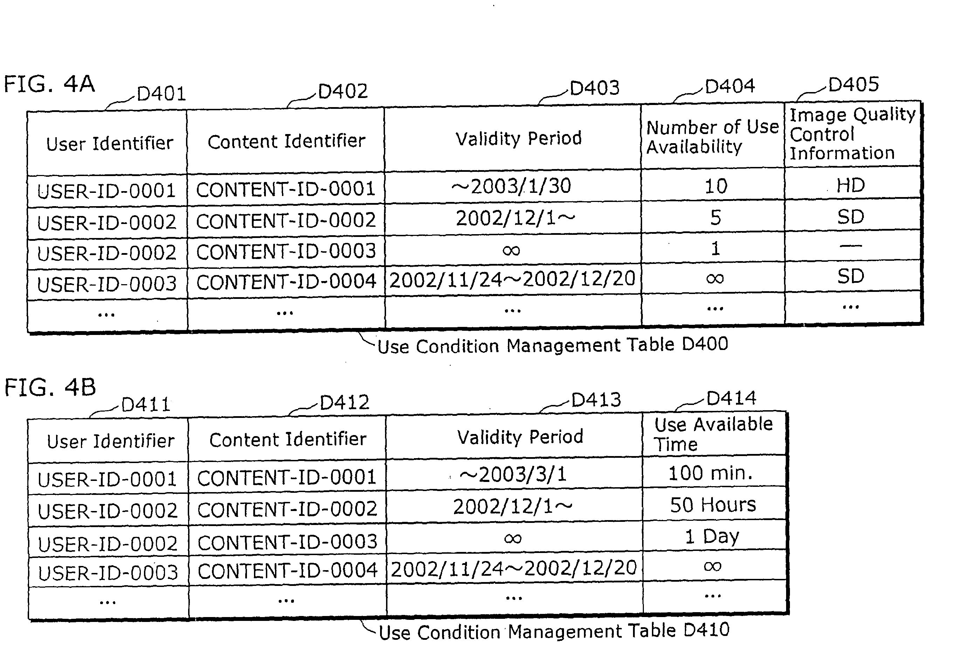

Specifically, the use condition storing unit 112a, as shown in FIG. 4A, has a use condition management table D400 including a user identifier D401 which indicates an owner of the use conditions, a content identifier D402 of a content whose use conditions permit the use of content, a validity period D403 which indicates starting and ending dates of which the content is permitted for use shown by the content identifier D402, a number of use availability D404 which indicates the number of times that the content can be used shown by the content identifier D402, and an image quality controlling information D405 which indicates the quality of content at the time when the content is used.

For example, it is indicated that a user whose user identifier D401 is "USER-ID-0001" has use conditions for a content "CONTENT-ID-0001" in which the content to be requested for its use is indicated by the content identifier D, and its validity period D403 is "~2003/1/30", the number of use availability D404 is "10 times" which means that the content is allowed to be used for 10 times, and the image quality control information D405 is HD.

Next, since it is necessary for the following explanation, specific data in the use condition storing unit 112b corresponding to the rights management method B are explained.

The use condition storing unit 112b, as shown in FIG. 4B, has a use condition management table D410 including a user identifier D411 which indicates an owner of the use conditions, a content identifier D412 of the content to which the use conditions ask for its use availability, and a validity period D413 which indicates starting and ending dates of which the content can be used shown by the content identifier D412.

Note that the data registration to the use condition storing unit 112a is performed when the right for using a content is purchased by the business entity β which manages the content distribution system S or by the Maker α which provides the rights management method A. The purchasing process can be executed for a user (1) by purchasing online from a content purchasing screen by connecting to a website of the Maker α, via the transmission channel N, which provides the rights management server, or (2) by purchasing offline using a postcard for purchasing and the like.

In the purchasing process, a user firstly specifies a content identifier D402 of the content to be purchased, then confirms the use conditions and performs the purchasing process. The user identifier D401 of the user who performed the purchasing process, the content identifier D402, and the use conditions are associated with each other and registered to the use condition management table D400 in the use condition storing unit 112a. As a result of the above-mentioned purchasing process, the use condition management table D400 in the use condition storing unit 112a is constructed.

The content key storing unit 103 is a database that manages content keys for decrypting encrypted contents, the content key storing unit 103 being used for obtaining a content key corresponding to a content identifier included in a license obtainment request when a license is generated in response to the license obtainment request sent from the terminal apparatus 300.

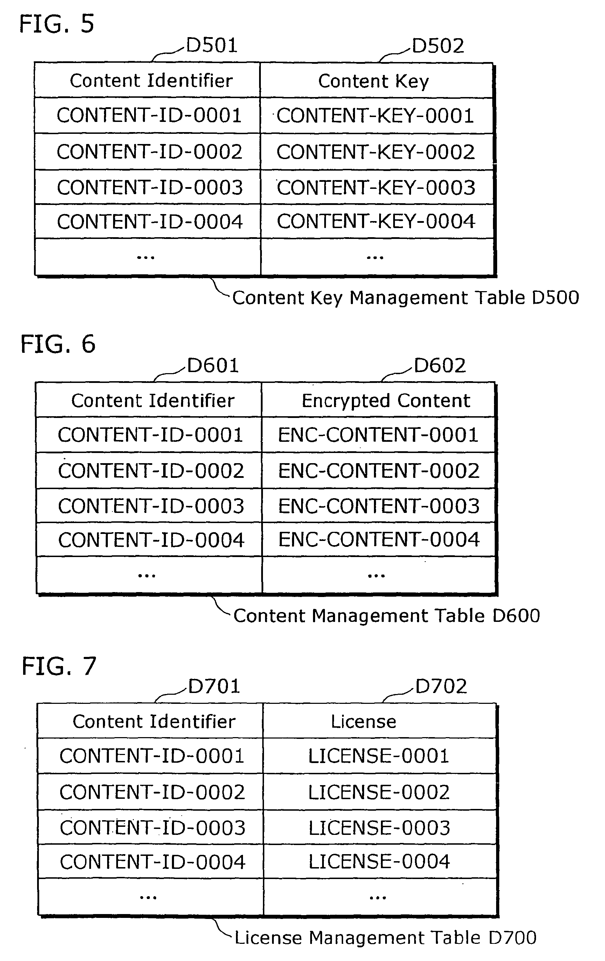

Specifically, the content key storing unit 103, as shown in FIG. 5, has a content key management table D500 made up with a content identifier D501 for uniquely identifying contents in the content distribution system S and a content key D502 corresponding to the content identifier D501. For example, the content key D502 for decrypting an encrypted content whose content identifier D501 is "CONTENT-ID-0001" is indicated as "CONTENT-KEY-0001".

Next, data held in a storing unit of the content distribution server 200 are explained with reference to a diagram.

The content storing unit 203 is used for obtaining an encrypted content corresponding to a content identifier included in the content obtainment request in response to the content obtainment request from the terminal apparatus 300, the content storing unit 203 being a database for managing encrypted contents.

Specifically, the content storing unit 203, as shown in FIG. 6, has a content management table D600 made up with a content identifier D601 and an encrypted content D602 corresponding to the content identifier D601. For example, an encrypted content D602 whose content identifier D601 is "CONTENT-ID-0001" is shown as "ENC-CONTETN-0001".

Note that data registrations to the content key storing unit 103 and the content storing unit 203 are performed when contents are provided by a content provider which provides the contents to the content distribution system S.

Next, data held in a storing unit of the terminal apparatus 300 are explained with reference to a diagram.

The license storing unit 303 is used for obtaining a license corresponding to a content identifier in response to a license obtainment request from the controlling unit 304 when the content is used at the terminal apparatus 300, the license storing unit 303 being a database for managing licenses.

Specifically, the license storing unit 303, as shown in FIG. 7, has a license management table D700 made up with a content identifier D701 and a license D702 in response to an encrypted content corresponding to the content identifier D701. For example, a license whose content identifier D701 is "CONTENT-ID-0001" is shown as "LICENSE-0001". In here, a data registration to a license storing unit 303 is performed when a license is obtained from the license generation server 100 by the terminal apparatus 300.

The content storing unit 305 is a database for managing encrypted contents, whose data structure is same as the data structure of the content management table D600 explained for the content storing unit 203.

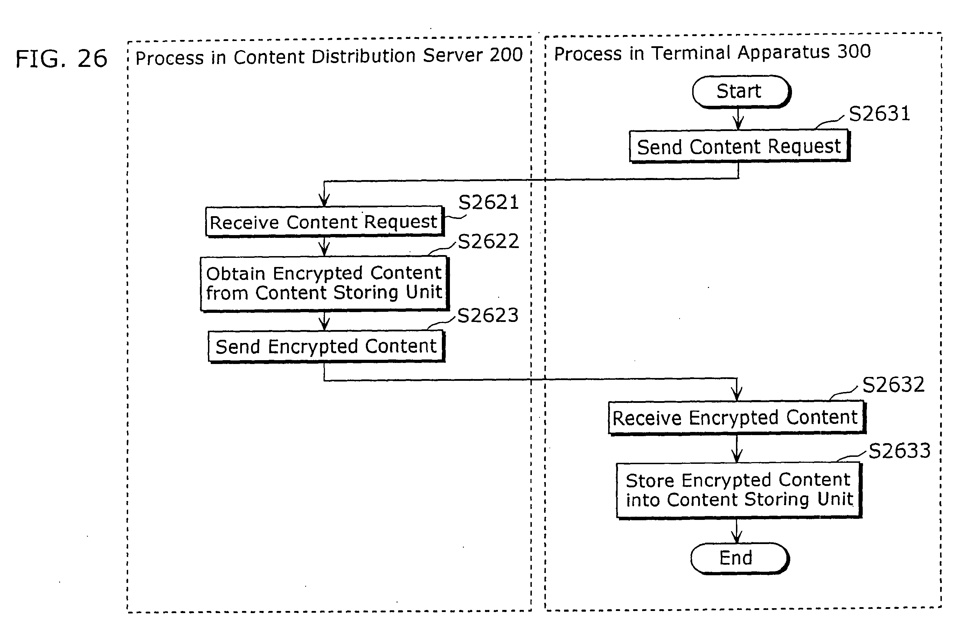

In the content distribution system S with above mentioned structures, a process of which a content is obtained from the content distribution server 200 by the terminal apparatus 300 and obtaining a license from the license generation server 100 by the terminal apparatus 300, a process of which the content use is started at the terminal apparatus 300, and a process of which the content use is terminated are explained as following orders with reference to FIG. 26 to FIG. 29. The processes are (1) process of which a content is obtained, (2) process of which a license is obtained, (3) process of which a content use is started, and (4) process of which the content use is terminated.

Proceeding to an explanation for each process, a communication message according to the present embodiments is explained.

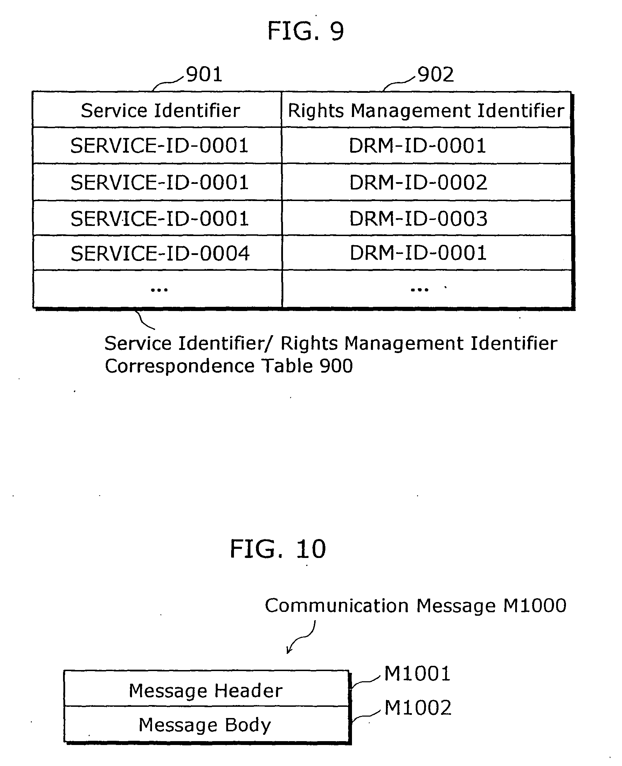

FIG. 10 is a diagram showing information of a message format of a communication message M1000 exchanged through communications between each server and a terminal apparatus 300 and between each functional block. The communication message M1000 in FIG. 10 is formed of a message header M1001 and a message body M1002. In here, the message header M1001 at least includes information for specifying a destination of a message and information for specifying a sender. The information for specifying a destination of a message is referred to as a message destination, and the information for specifying a sender is referred to as a destination for replying a message to the sent message. An IP address is a typical example of the sender or the information for specifying a destination of the message. Also, the message header may include information necessary for a verification process when the verification process is performed between a server which sends and receives a communication message, an apparatus and a functional block. On the other hand, the message body M1002 includes unique information for each message. The unique information in the message body M1002 is explained by each message.

### (1) Content Obtainment Process

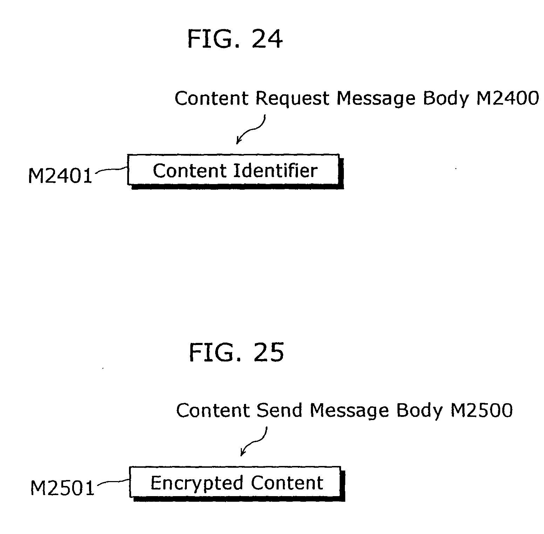

First, a data structure of a communication message relating to a content obtainment process is explained with reference to FIG. 24 and FIG. 25.

A content request message body M2400 in FIG. 24 is composed of a content identifier M2401. On the other hand, a content send message body M2500 in FIG. 25 is composed of an encrypted content M2501.

Next, a process at each unit for a terminal apparatus 300 to obtain an encrypted content from the content distribution server 200 is explained with reference to FIG. 26.

The terminal apparatus 300 starts a content obtainment process according to information input to an application of the terminal apparatus 300 and a content obtainment instruction by a user. The user has to input at least one of a content identifier for specifying an encrypted content to be obtained or information equivalent to the content identifier. The information equivalent to the content identifier is information such as content name which enables to specify the content identifier, corresponding to the content identifier one on one by referring to a correspondence table with the content identifier. The following is explained assuming that a content obtainment process is started after a user inputs a content identifier "CONTENT-ID-0001".

The terminal apparatus 300 which received an information input by a user generates a content request message at the content requesting unit 306 and sends it to the content distribution server 200 via the communication unit 301 (FIG. 26: Step S2631).

The content identifier M2401 included in the content request message body M2400 assigns a content identifier inputted by a user. In here, "CONTENT-ID-0001" is assigned.

The content distribution server 200 receives the content request message through the communication unit 201 (FIG. 26: Step S2621). The content obtainment unit 202 extracts a content identifier M2401 from the content request message body M2400 and specifies an encrypted content M2501 to be obtained using a content identifier M2401 as a key and obtains the encrypted content from the content management table D600 of the content storing unit 203 (FIG. 26: Step S2622). In here, since "CONTENT-ID-0001" is assigned to a content identifier M2401, the encrypted content to be obtained is indicated as "ENC-CONTENT-0001". The content obtainment unit 202 generates a content send message adding a message header to the encrypted content M2501 and sends it to the terminal apparatus 300 through the communication unit 201 (FIG. 26: Step S2623).

The terminal apparatus 300 receives the content send message through the communication unit 301 (FIG. 26: Step S2632), stores the encrypted content associating with the content identifier M2401 (FIG. 26: Step S2633), and ends the process.

### (2) License Obtainment Process

Next, a license obtainment process is explained.

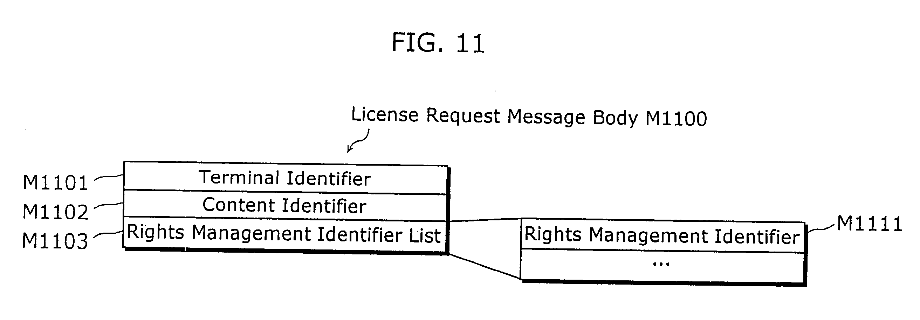

First, data structures of communication messages relating to the license obtainment process are explained with references to FIG. 11 to FIG. 14.

The license request message body M1100 in FIG. 11 made up with a terminal identifier M1101, a content identifier M1102, and a rights management identifier list M1103. In here, the rights management identifier list M1103 is rights management identifiers M1111 of an explainable rights management method listed by a terminal apparatus 300 which sends a license request message.

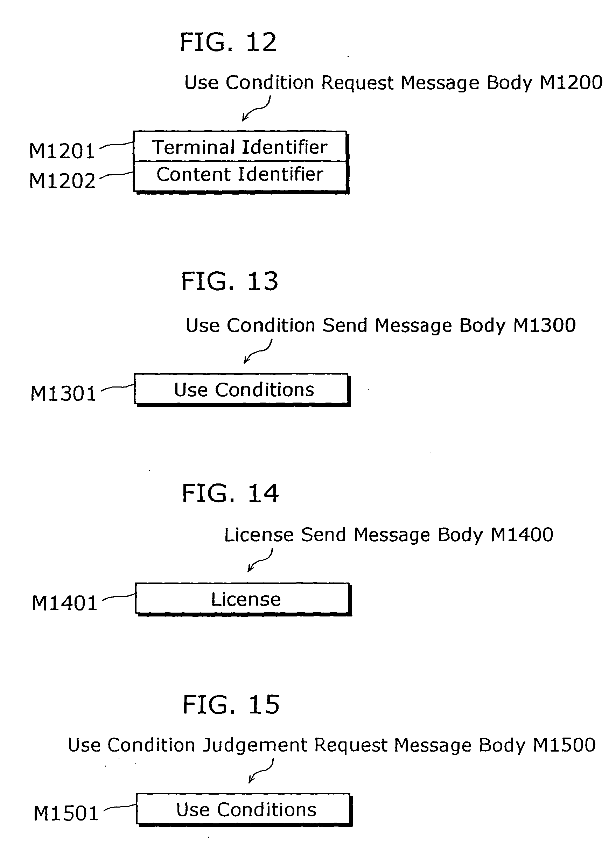

A use condition request message body M1200 in FIG. 12 is made up with a terminal identifier M1201 and a content identifier M1202. A use condition send message body M1300 in FIG. 13 has user conditions M1301. A license send message body M1400 in FIG. 14 has a license M1401.

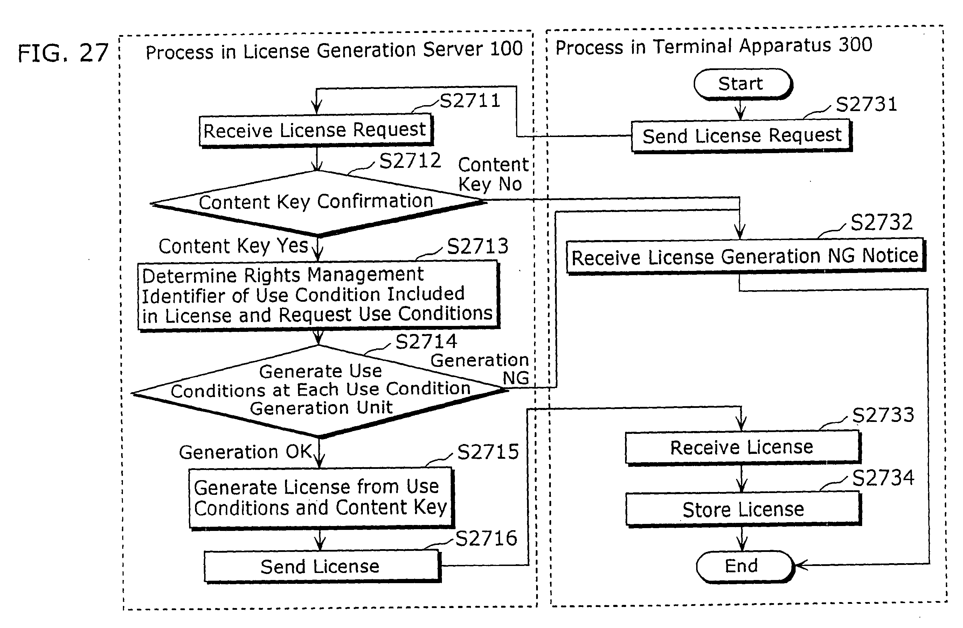

Next, a process of each unit for a terminal apparatus 300 to obtain a license from the license generation server 100 is explained with reference to FIG. 27.

The terminal apparatus 300 starts a license obtainment process according to an information input to an application of the terminal apparatus 300 and a license obtainment instruction by a user. The user has to input at least one of a content identifier for specifying a license to be obtained or information equivalent to the content identifier. The following is explained assuming that a license obtainment process is started after a user inputs a content identifier "CONTENT-ID-0001".

The terminal apparatus 300 which receives an information input by a user generates a license request message in the license requesting unit 302 and sends it to the content distribution server 200 through the communication unit 301 (FIG. 27: Step S2731).

The terminal identifier M1101 included in the license request message body M1100 assigns "TERMINAL-ID-0001" to a terminal identifier of the terminal apparatus 300 which sends the license request message, the content identifier M1102 assigns "CONTENT-ID-0001" to a content identifier inputted by a user, the rights management identifiers list M1103 assigns a right management method capable of explaining use conditions at the terminal apparatus 300; that is, it assigns a rights management identifier "100A" for the rights management method A which is a rights management method for a rights explaining unit existed in the terminal apparatus 300 and the rights management identifier "100B" for the rights management method B.

The license generation server 100 receives the license request message through the communication unit 101 (FIG. 27: Step S2711). The license generation unit 102 extracts the content identifier M1102 from the license request message body M1100 and judges whether or not a content key corresponding to the content identifier M1102 is found in the content key storing unit 103 (FIG. 27: Step S2712).

In the case where the content key does not exist, the license generation server 100 cannot generate a license so that the process is terminated and a reply message included in the message body which notifies that the content key does not exist, that is, that the content identifier is unauthorized is sent to the terminal apparatus 300. Here, the present embodiment continues its explanation as a content key exists since a content key "CONTENT-KEY-0001" corresponding to a content identifier "CONTENT-ID-0001" exists as shown in FIG. 5.

In the case where the content key exists, the license generation unit 102 obtains the content key and performs a following process.

The license generation unit 102 extracts the rights management identifiers list M1103 from the license request message body M1100 and sends a use conditions request message to a use condition generation unit corresponding to the rights management identifier M1111 included in the rights management identifiers list M1103 (FIG. 27: Step S2713). In here, both the rights management identifier "100A" and the rights management identifier "100B" are set on the rights management identifier list M1103. Therefore, use conditions request messages are sent to a use condition generation unit 100a in the rights generation unit 10A corresponding to the rights management method A and to a use condition generation unit 100b in the rights generation unit 10B corresponding to the rights management method B. Note that the use conditions request message can be sent to either one of the rights conditions generation unit 100a or the rights conditions generation unit 100b, or to all rights generation units held by a license generation server 100.

On the rights management identifiers list M1103, rights management method capable of judging use conditions at a terminal apparatus 300 and a rights management identifier for a rights management method capable of updating use conditions at the terminal apparatus 300 can be assigned.

In an operation, the above mentioned process can be performed at the rights generation unit corresponding to the rights management method by determining the rights management method for controlling the content use at the terminal apparatus 300 per service.

In here, a service identifier which is information for uniquely specifying the service in the content distribution system S, a rights management identifier for a rights management method for managing rights at a service corresponding to the service identifier, and a service identifier/ rights management identifier correspondence table D900 which is a correspondence table of the service identifier and the rights management identifier are explained.

The service identifier/ rights management identifier correspondence table D900 is used to associate a service identifier with a rights management identifier. Specifically, the service identifier/ rights management identifier correspondence table D900 shown in FIG. 9 manages a service identifier D901 and a rights management identifier D902.

For example, in FIG. 9, rights management methods corresponding to a service whose service identifier D901 is "SERVICE-ID-0001" are indicated as rights management methods whose rights identifiers D902 are "DRM-ID-0001", "DRM-ID-0002", and "DRM-ID-0003".

The terminal identifier M1201 included in the use condition request message body M1200 assigns the terminal identifier included in the license request message body M1100 and the content identifier M1202 assigns the content identifier M1102 included in the license request message body M1100.

A process in the rights generation unit is explained using the rights generation unit 10A as an example.

The use condition generation unit 110a receives the use conditions request message. First, the use condition generation unit 110a extracts the terminal identifier M1201 from the use condition request message body M1200 and specifies a user identifier corresponding to a key for the terminal apparatus M1201 from the user information management table D300 held by the user information storing unit 111a.

In the case where the terminal identifier M1201 does not exist in the user information management table D300, it is judged that the terminal apparatus 300 which sent the license request message is not registered for a service at the rights generation unit 10A; the process is terminated since the use conditions cannot be generated; and a reply message is sent, the message including a message that the terminal identifier does not exist in the message body, to the license generation unit 102 through the use condition generation unit 110a.

In the present embodiment as shown in FIG. 3, a user identifier "USER-ID-0001" exists as a user identifier corresponding to the terminal identifier "TERMINAL-ID-0001". When the user identifier D391 exists, a reply message which includes messages that user verification is completed and the user identifier D301, in the message body, is sent to the use condition generation unit 110a.

The use condition generation unit 110a which receives the reply message specifies targeted use conditions from a use condition management table D400 held in the use condition storing unit 112a, according to the user identifier D301 extracted from the reply message and the terminal identifier M1201 extracted from the use conditions request message. A user identifier D401 and a content identifier D402 on the use condition management table D400 specify a record in which the user identifier D301 and the content identifier 1102 match each other. When there is no appropriate record, a reply message is sent to the use condition generation unit 110a, the message including a message that the use conditions do not exist. On the other hand, use conditions for a distribution is generated based on the stored use conditions when there is an appropriate record.

As methods for generating use conditions, there are a method for generating all use conditions described on a record, a method for generating a part of use conditions described on the record, and the like. Here explains the generation methods for use conditions using specific examples. The use conditions for a record specified by the user identifier "USER-ID-0001" and the content identifier "CONTENT-ID-0001" are the validity period "~2003/1/30", the number of use availability "10 times", and the image quality control information "HD" as shown in FIG. 4.

When all use conditions are distributed, the number of use availability which is a changeable use available condition is generated as "10 times" and the number of use availability of the record before the generation becomes "0 times". When a part of user rights is distributed, the number of use availability which a user requests, for example, three times, is sent to the changeable use availability conditions. The user availability conditions are generated as three times and the number of use availability after the record is used can be operated as "seven times". When it is determined that a rights management method A is generated by an operation by Maker α at once, the rights management method A is generated at once and the number of use availability of the record after the generation becomes "9 times". While various operations can be suggested, a detailed explanation about the structure is not discussed since it is not an argument for the present invention.

Unchangeable use availability conditions and use control information do not change their values by the generation of use conditions. Here explains assuming that the number of use availability is distributed as 10 times.

The use condition generation unit 110a generates the use conditions M1301 from the obtained information from the use condition storing unit 112a (FIG. 27: Step S2714), and sends the use conditions M1301 included in the use condition send message body M1301.

In here, contents of the use conditions M1301 are specifically explained. The use condition generation unit 110a assigns an identifier for indicating a validity period for content use to the use availability information identifier 831 and "~2003/1/30" to use availability information corresponding to the identifier. Further, it assigns an identifier for indicating a number of contents availability to a next use availability information identifier 831 and "10 times" to use availability information in accordance with the identifier. In addition, it assigns an identifier for indicating image quality control information to the use control information identifier and "HD" to use control information in accordance with the identifier.

When use conditions are sent, the number of use availability which is a changeable value on the use condition management table D400 has to be updated by calculating by (the number of use availability which has been stored) - (generated number of use availability). According to the above example, it is updated to 0 times by calculating as (10 times) - (10 times) = 0 times. The timings of an update are assumed when the use condition generation unit 110a sends the use conditions to the license generation unit 102, when the license generation unit 102 sends a license to the terminal apparatus 300, when it is able to be confirmed that the terminal apparatus 300 receives the license, and the like. In addition, when the license is not sent after the use conditions are updated, it is necessary to restore the use conditions to the original value. Since it is not essential to the present invention, the method for restoring a value is not explained in here.

Through the above mentioned process, the license generation unit 102 receives a use conditions send message or a reply message indicating an unavailability of generating use conditions respectively from the rights generation unit 10A and the rights generation unit 10B. The license generation unit 102 judges whether or not a license from the use conditions send message or the reply message is permitted for its generation.

Various operations are possible for the judgement of generating the license. For example, a generation is available only when the use conditions are received from all rights generation units which sent the use conditions send message, a generation is available when the use conditions are received from at least one of the rights generation units which sent the use conditions send message, and the like. Further, when reply messages from the all rights generation units show that a license cannot be generated, or when the reply messages are judged by an operation that the license cannot be generated, a reply message including a reason of why the generation is not permitted is sent to a terminal apparatus 300.

Here explains the case where use conditions are sent from both the use condition generation unit 110a and the use condition generation unit 110b, and a license can be generated.

The license generation unit 102 generates a license header 801. In here, a content key 811 is previously obtained.

The priority information 812 is set in the case where a priority of use conditions is set in a license interpretation process at a terminal apparatus 300. For example, a list of (rights management identifier: priority) is described in the priority information 812. Specifically, when a priority of the rights generation unit 10A is higher than that of the rights generation unit 10B, it is described as "100A: 1", "100B: 2". The interpretation process according to the priority information is explained later in the license interpretation process at the terminal apparatus 300.

The control identification information 813 judges an availability of the use of content in the license interpretation process and specifies a control method ("AND process" and "OR process") for the controlling unit 301 in the terminal apparatus 300 when the license is updated. Specifically, in the case of where a final use availability is judged from content use availability judgement results replied from a plurality of use condition judgement units 311, the control of content use availability is a control which takes "AND" of all judgement results (available only if all use condition judgement results are permitted for use), a control which takes "OR" (available if there is at least one permitted for use among the use condition judgement results), and the like.

Note that AND process and OR process may be coexisted in the case where three or more judgements results are found. Specifically, it is a case where a final use availability is judged, when the controlling unit 304 obtains three judgement results a~c from the use conditions judgment units 311a~c from a result of processing the judgement results a and b by AND, and a result of processing the judgement result c by OR.

Thus, the license header 801 is generated.

Next, a generation of the information list for respective rights management 802 is explained.

While the use conditions obtained from each rights generation unit are assigned to the use conditions 823, the license generation unit 102 assigns the rights management identifier 821 to a rights management identifier corresponding to a rights generation unit that is a sender of the use conditions, information for indicating that it is valid to the management information 822, the received use conditions to the use conditions 823, and generates the information for each rights management.

The license generation unit 102 repeats the above mentioned process for each received use condition and generates an information list for each rights management 802 (FIG. 27: Step S2715).

The license generation unit 102 generates a license 800 from the license header 801 and the information list for each rights management 802, assigns the generated license 800 to the license M1401 for the license send message body M1400, and sends the license to the terminal apparatus 300 (FIG. 27: Step S2716).

The terminal apparatus 300 receives the license send message body M1400 through the communication unit 301 and obtains the license M1401 (FIG. 27: Step S2733).

The terminal apparatus 300 then stores the obtained license M1401 associating with the content identifier which is same content identifier as the content identifier M1102 for the license request message, into the license storing unit 303 (FIG. 27: Step S2734).

In here, an association process is unnecessary when the content identifier is included in the license header 811.

Furthermore, when the terminal apparatus 300 receives a reply message including a message notifying that a generation is not permitted from the license generation server 100, the reasons of why the generation is not permitted are presented to a user and the process is terminated (FIG. 27: Step S2732).

While the above explanation explained that the terminal apparatus 300 sends use conditions corresponding to an interpretable rights management method by including the use conditions in the license, the license generation server may send a license by including all use conditions to be generated. In this case, the license request message body M1100 does not need to include the rights management identifiers list M1103.

### (3) Process at Content Use Start Time

Next, a process at a terminal apparatus 300 at which the use of content is started. First, a data structure of a communication message relating to the process at the time when use of content is started is explained with references to FIG. 15 ~ FIG. 17.

A use condition judgement request message body M1500 in FIG. 15 is formed of use conditions M1501.

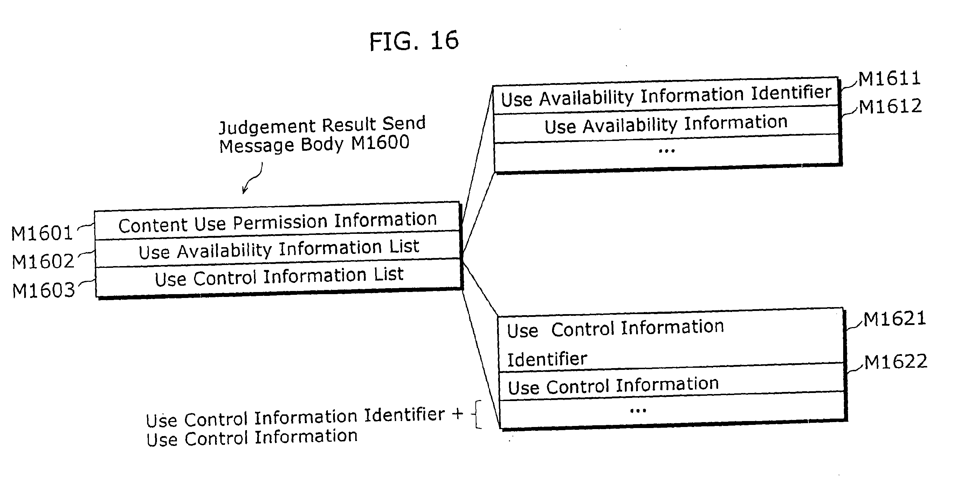

A judgement result send message body M1600 in FIG. 16 is made up with content use availability information M1601 which indicates a result of a content use availability, a use availability information list M1602 which is a list of pairs of a use availability information identifier M1611 and a use availability information M1612, and a use control information list M1603 which is a list of pairs of a use control information identifier M1621 and a use control information M1622. The use availability information identifier, the use availability information, the use control information identifier, and the use control information are explained already.

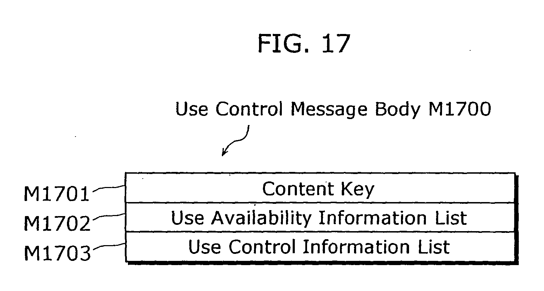

A use control message body M1700 in FIG. 17 is formed of a content key M1701, the use availability information list M1702, and the use control information list M1703. The data structures of the use availability information list M1702 and the use control information list M1703 are same as those of above described use availability information list M1602 and use control information list M1603.

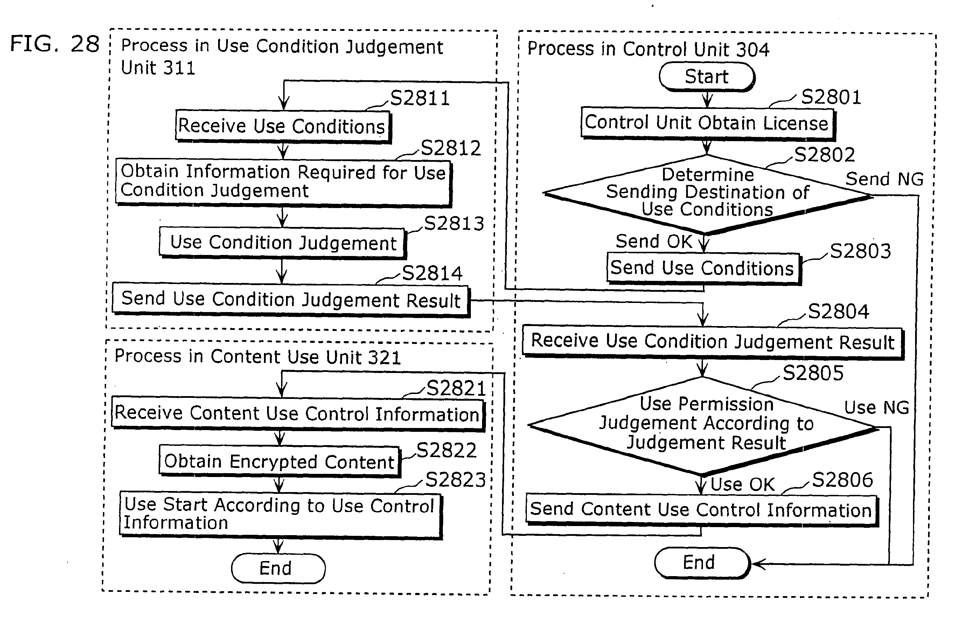

Next, a process at each unit in the case where the terminal apparatus 300 starts using content is explained with reference to FIG. 28.

The terminal apparatus 300 starts the process of using content by receiving an information input to an application of the terminal apparatus 300 and an instruction for starting use of the content by a user. The user inputs information pursuant to at least one of a content identifier or a content identifier which identify a content to be used, to the application of the terminal apparatus 300. In here, a user do not need to perform unnecessary use of contents by inputting use information for a content such as "reproduction", "print" and "copy" and limiting the use information for the content. In the case where use information for the content is not inputted, the content is used according to typical use information included in a license for each content.

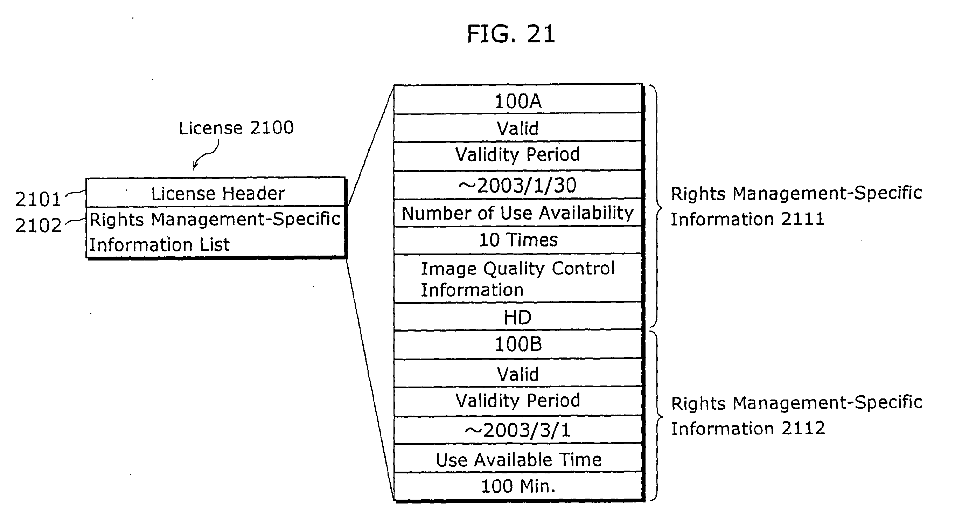

The following is explained based on an assumption that a user inputs "playback" with a content identifier "CONTENT-ID-0001" as content use information and starts a process of using the content. Here explains about a license 2100 which is a license corresponding to the content identifier "CONTENT-ID-0001" with reference to FIG. 21.

The rights management-specific information for the license 2100 is now explained. The rights management-specific information includes first and second rights management-specific information. Followings are assigned (1) to the first rights management-specific information, "100A" which indicates a rights management method A as a rights management identifier 821, "valid" as management information 822, "validity period" as a first use availability information identifier 831 of use conditions 823, "~2003/1/30" as use availability information 832, "the number of use availability" as a second use availability information identifier 831, "10 times" as use availability information 832, "image quality control information" as a first use control information identifier 833, and "HD" as use control information, and (2) to the second rights management-specific information, "100B" as the rights management identifier 821, "valid" as the management information 822, "validity period" as the first use availability information identifier 831 of the use conditions 823, "~2003/3/1" as the use availability information 832, "use availability time" as the second use availability information identifier 831, and "100 minutes" as the use availability information 832.

The terminal apparatus 300 which receives an information input by a user starts a process from a control unit 304. The control unit 304 specifies a license 800 corresponding to a content identifier as a key from the licensing storing unit 303 and obtains the license 800 (FIG. 28: Step S2801).

The control unit 304 extracts rights management-specific information included in the rights management-specific information list 801 in the license 800 and the rights management identifier 802 included in the rights management-specific information.

Then, the control unit 304 determines a use condition judgement unit for sending use conditions based on the extracted rights management identifier 821 (FIG. 28: Step S2802).

In here, the control unit 304 can limit a use condition judgement unit which sends use conditions using a service identifier/rights management identifier correspondence table.

The control unit 304 can also have a correspondence table to a rights management identifier and rights interpretation unit or to a use condition judgement unit, or inquire about the rights management identifier at the use condition judgement unit.

The control unit 304 sends use conditions 823 of the rights management-specific information including the rights management identifier 821 to the use condition judgement unit 311 corresponding to the rights management identifier 821. In here, the control unit 304 sends all rights management information to the use condition judgement unit 311 and the use condition judgement unit 311 can perform a specification process for the use conditions according to the rights management identifier 821.

In the case where the use condition judgement unit 311 corresponding to the rights management identifier 821 does not exist, or where the use condition judgement unit 311 cannot communicate, the process is terminated.

In the case where the use condition judgement unit 311 corresponding to the rights management identifier 821 does not exist, following process can be performed based on an assumption that a content availability NG is replied as a judgement result. Also, default values can be determined for each rights management identifier. For example, in the case where the use condition judgement unit 311a of the rights management identifier "100A" does not exist, default values are determined to "use OK" "reproduction availability time" "1 hour" as a false-judgement result.

Here explains about the case of license 2100 which is a specific example of the license 800. The rights management-specific information 2111 and the rights management-specific information 2112 are included in the license 2100. First, a process of the rights management-specific information 2111 is explained. The rights management identifier "100A" is extracted from the rights management-specific information 2111. The rights management identifier "100A" is a rights management identifier corresponding to the rights management method A, and the corresponding use condition judgement unit is a use condition judgement unit 311a corresponding to the rights management method A.

Next, a process of the rights management-specific information 2112 by the control unit 304 is explained. The rights management identifier "100B" is extracted from the rights management-specific information 2112. The rights management identifier "100B" is a rights management identifier corresponding to the rights management method B, and the corresponding use condition judgement unit is a use condition judgement unit 311b corresponding to the rights management method B.

The control unit 304 sends use conditions to the conditions judgement unit 311a, the use conditions being included in the rights management-specific information 2111 as use conditions M1501 for the use condition judgement request message body M1500. It also sends use conditions to the conditions judgement unit 311b, the use conditions being included in the rights management-specific information 2112 as the use conditions M1501 of the use condition judgement request message body M1500 (FIG. 28: Step S2803). In here, the control unit 304 can extract, from the use conditions M1501, only use availability information relating to a content use availability judgement.

Next, a process at a use condition judgement unit which receives the use condition judgement request message is explained. The process at a use condition judgement unit 311a is explained as an example.

The use condition judgement unit 311a receives use condition judgement request message and extracts the use conditions (FIG. 28: Step S2811).

The use condition judgement unit 311a judges whether or not the use of content is permitted from use availability information included in the use conditions and a function which a terminal apparatus 300 has. Specifically, a use condition judgement on use conditions for the rights management-specific information 2111 is explained. First, a judgement for the use of content availability by a validity period "~2003/1/30" which is the first use availability information is explained. Specifically, the use of content is judged as OK when the present time is "2002/12/24" since it is within the validity period. When the present time is "2003/02/13", the use of content is judged as NG since the present time is after the validity period.

Note that the use condition judgement unit 311a can obtain information about functions which the terminal apparatus 300, the information being needed for a content use availability judgement (FIG. 28: Step S2812). Specifically, it affirms whether the terminal apparatus 300 has a secure clock which ticks secure time as a function of the terminal apparatus 300. Because a judgement of whether or not the present time is within the validity period becomes meaningless without a secure clock.

In the case where a secure clock does not exist, use of content is judged as reproduction NG. In the case where a secure clock exists, the use condition judgement unit 311a obtains securely managed present time and judges whether or not the present time is within the validity period. When the present time is within the validity period, the use of content is judged as OK, and when the present time is after the validity period, the use of content is judged as NG. For example, in the case where the terminal apparatus 300 has a secure clock function and the present time is "2002/12/24" which is within the validity period, the content use is judged as OK. The content use is judged as NG in the case where the present time is "2003/02/13" which is after the validity period.

Moreover, in the case where a validity period is indicated as "-" which shows that a validity period is not assigned, the use of content is judged as OK even without a secure clock.

Next, a content use availability judgement by the number of use availability "10 times" as the second use availability information is explained.

The use condition judgement unit 311a judges whether the number of times that a content is used is once or more. When the content is used for once or more, the use of content is permitted and when the content is used for "0" times, the use of content is not permitted. The content can be used for "10 times" in the rights management-specific information 2111. Therefore, the content is permitted for its use.

Since content use availability judgements at both the first and second use availability information permits the use of content, the use condition judgement unit 311a judges for the received use conditions that the use of content is OK(FIG. 28: Step S2813). Further, in the case where there are a third use availability information and the fourth use availability information, judgement of content use availability is judged for each information.

The use condition judgement unit 311a generates a judgement result send message and sends it to the control unit 304 (FIG. 28: Step S2814).

The content use availability information M1601 included in the judgement result send message body M1600 sets "use OK" which is a result of content use availability at the use condition judgement unit 311a, and the use availability information M1602 sets the number of use availability which is changeable use availability information in the use availability information. Specifically, "image quality control information" and "HD" are assigned.

Next, a process in the control unit 304 which receives judgement result send messages from a plurality of use condition judgement units 311 is explained.

The control unit 304 receives judgement result send messages from one or more use condition judgement unit 311 (FIG. 28: Step S2804). The control unit 304 extracts a content use availability information M1601, a use availability information list M1602, and the use control information list M1603 from the judgement result send message body M1600.

First, a process of content use availability judgement in the control unit 304 by a plurality of content use availability information is explained.

The control unit 304 judges a content use availability from a priority information 812 and the control identification information 813 which are included in the plurality of content use availability information and a license header 801 (FIG. 28: Step S2805).

In here, the priority information 812 indicates a priority in a content use availability judgement process. When the priority is set as "100A: 1", "100B: 2", it shows that the content use availability information from use condition judgement unit 311a corresponding to the rights management identifier "100A" is prior to the content use permission information from the use condition judgement unit 311b corresponding to the rights management identifier "100B". For example, when the control unit 304 receives "use OK" from the use condition judgement unit 311a and "use NG" from the use condition judgement unit 311b, the control unit 304 prioritizes a reply from the use condition judgement unit 311a and judges as content use OK. In addition, when the priority information sets a priority for each rights management method, values are assigned and "-" is assigned when there is no priority.

Next, the control identification information 813 is explained. The control identification information 813 indicates a control method in the content use permission judgement process, in the case where the control unit 304 judges the use of content based on a plurality of content use permission information. In other words, AND process, OR process and the like are included.

Firstly, AND process is explained. In the AND process, (1) when a plurality of the use permission information is permitted its use as the result of the AND process, the control unit 304 judges the use of content as OK, and (2) when the result does not permit use of a plurality of the use permission information, the control unit 304 judges the use of content as NG. In other words, the control unit 304 permits the use of content when all use permission information are permitted for use, while it does not permit the use of content when there is at least one use permission information which is not available for use.

Next, OR process is explained. In the OR process, (1) when a plurality of use permission information is permitted its use as the result of the OR process, the control unit 304 judges the use of content as OK, and (2) when the result does not permit use of a plurality of use permission information, the control unit 304 judges the use of content as NG. In other words, the control unit 304 permits the use of content when there is at least one use permission information which is available for use, while it does not permit the use of content when all use permission information is not available for use.

The control identification information 813 is basically configured. When it is not configured, a processing method is determined by a default. For example, AND process can be performed.

Note that, the control unit 304 can judge the use availability by the process which corresponds to the control identification information 813, using use permission information replied from a use condition judgement unit 311 corresponding to a rights management method which is listed in a given order of priority or higher, by collaborating the priority information 812 and the control identification information 813.

Also, use permission information to be judged can be qualified using the service identifier/ rights management correspondence table.

When the control unit 304 judges the use of content as NG, the process is terminated and a user is notified about the result.

Next, a process is explained, the process being in which the control unit 304 generates a use availability information list M1702 from the use availability information list M1602 when the control unit 304 judges the use of content as OK, the use permission information list M1602 being obtained by a plurality of use condition judgement units 311, and the use permission information list M1702 being included in the use control message.

Here, the use availability information list M1702 included in the use control message is information for preventing a content to be used over the conditions under which the content is permitted for use for the case where a content is used at the content use unit 321. Specifically, it is explained with following examples.

The first example explains a case where "10 times" is assigned to "the number of reproduction availability" on the use availability information list obtained from the use condition judgement unit 311a by the control unit 304, and where " 100 minutes" is assigned to "reproduction availale time" on the use availability information list obtained from the use condition judgement unit 311b. In this case, on the use availability information list M1702, "10 times" is assigned to "the number of reproduction availability" and "100 minutes" is assigned to "reproduction available time".

Note that a use availability information identifier can be added to the use availability information list M1702 only when AND process is performed, by each use availability information identifier, for use availability information list obtained by the control unit 304, and all use availability information list has use availability information corresponding to the same use availability information identifier

In the above example, assigning "10 times" to "the number of reproduction availability" and "100 minutes" to "reproduction available time" is considered that OR process is performed for each use availability information identifier. The control identification information 813 of the license header 801 may include the control information concerning the AND process and the OR process of the use availability information.

The second example is a case where "10 times" is assigned to "the number of use availability" on the use availability information list which the control unit 304 obtained from the use condition judgement unit 311a, "three times" is assigned to "the number of use availability" on the use availability information list obtained from the use condition judgement unit 311b, and the number of use availability as an item of use availability information is duplicated.

When an item of the use availability information is duplicated and the value of use availability information matches the value of corresponding item of the use availability information, the matched value is assigned. In this example, the item of use availability information is duplicated and the value of use availability information does not match the value of corresponding item of the use availability information. In this case, "10 times" is assigned to offer convenience for a user. That is, "10 times" is assigned to "the number of reproduction availability" on the use availability information list M1702.

Note that, the value of "three times" can be assigned focusing on a protection of content rights; information can be assigned according to the priority information 812 which includes information about to which one of the convenience or the rights protection a priority is given in a process; or the value is assigned as the use of content is not permitted judging that the process cannot be performed.

Furthermore, the control unit 304 (1) stores a rights management identifier for the rights management method which sends use availability information assigned on the use availability information list M1702 and (2) performs an updating process only in a use condition update unit corresponding to the rights management method when the use conditions are updated.

Next, a process in which the control unit 304 generates the use time availability control information list M1703 included in the use control message from a plurality of use control information is explained when the use of content is permitted.

In here, the use control information list M1703 included in the use control message is information concerning the utilization control in the case where the content is used in the content use unit 321. Specifically, it is explained with references.

The first example is a case where "HD" is assigned to "image quality control information" on the use control information list obtained by the control unit 304 from the use condition judgement unit 311a, and where "5.1 ch" is assigned to "sound quality control information" on the use availability information obtained from the use condition judgement unit 311b. In this case, "HD" is assigned to "image quality control information" and "5.1 ch" is assigned to "sound quality control information" on the use control information list M1703.

Note that a u se availability information identifier can be added to the use control information list M1703 only when AND process is performed, by each use availability information identifier, for use control information list obtained by the control unit 304, and all use control information list has use control information corresponding to the same use availability information identifier. In the above mentioned example, assigning "HD" to "image control information" and "5.1 ch" to "sound quality control information" on the use control information list M1703 is considered as performing OR process for each use availability information identifier.

The control identification information 813 of the license header 801 may include control information concerning the AND process and the OR process of the use control information.

The second example is a case where "HD" is assigned to "image quality control information" on the use control information list obtained by the control unit 304 from the use condition judgement unit 311a, "SD" is assigned to "image quality control information" on the use availability information list obtained from the use condition judgement unit 311b, and the image control information which is an item of the use control information is duplicated.

When an item of the use control information is duplicated and a value of the use control information matches the value of corresponding item of the use control information, the matched value is assigned. In the above mentioned example, the item of the use control information is duplicated and the value of the utilization control information differs with the value of corresponding item of the use control information. In this case, "HD" is assigned to offer convenience for a user. That is, "HD" is assigned to "image quality control information" on the use control information list M1703.

Note that, "SD" can be assigned focusing on a protection of content rights; information can be assigned including information about which one of the convenience or the rights protection is prioritized for processing in the priority information 812 of the content header 801 according to the priority information 812; or value is assigned as the use of content is not permitted judging that the process cannot be performed.

The control unit 304 generates a use control message from the content key 811 of the license header 801, the use availability information list M1702, and the use control information list M1703.

The information included in the use availability information list M1702 and the use control information list M1703 can be qualified depending on conditions for the use of content. Specifically, when the condition for the use of content is "reproduction", use availability information such as "the number of print pages" and "print quality" is not added to the list since "the number of print pages and "print quality" are not related to the "reproduction" process.

Next, the control unit 304 specifies the content use unit 321 based on a use availability information identifier included in use availability information and sends the use control message (FIG. 28: Step S2806).

In here, a matching process with the use conditions inputted by a user, in this case "reproduction", may be performed. In the matching process, the user starts using a content when an intention of a user and use availability information match. When the intention of the user and the use availability information do not match, the process is terminated.

The content use unit 321 is set for each use available process. A rendering apparatus for audiovisual reproduction and a printer apparatus for printing are the examples. In here, a reproducible content use apparatus 321 is specified since the number of reproduction availability is assigned. Note that, in the case where use availability information list M1702 includes use availability information concerning a plurality of content use apparatuses, the specification process follows either use conditions inputted by a user or determines the process as NG. Specifically, it is a case such as when "the number of reproduction availability" and "the number of print availability" are included in the use availability information list M1702.

In the case where these conflicting use availability information is included, the specification process follows the use conditions, causes a user to select a content use unit 321 at a timing of setting up the use availability information M1702, or determines the process as NG.

The content use unit 321 receives the use control message (FIG. 28: Step S2821). Then, the content use unit 321 receives a content identifier inputted by a user from an application of a terminal apparatus. The content use unit 321 specifies an encrypted content corresponding to a license 800 from the content storing unit 304 by the content identifier as a key and obtains the encrypted content (FIG. 28: Step S2822).

The content use unit 321 extracts the content key 1701 of the use control message, the use availability information list M1702 and the use control information list M1703. The encrypted content is decrypted with the content key M1701 and reproduced according to the use control information (FIG. 28: Step S2823). However, the use of content is permitted only in the range of which the use availability information permits.

### (4) Process at Content Use End Time

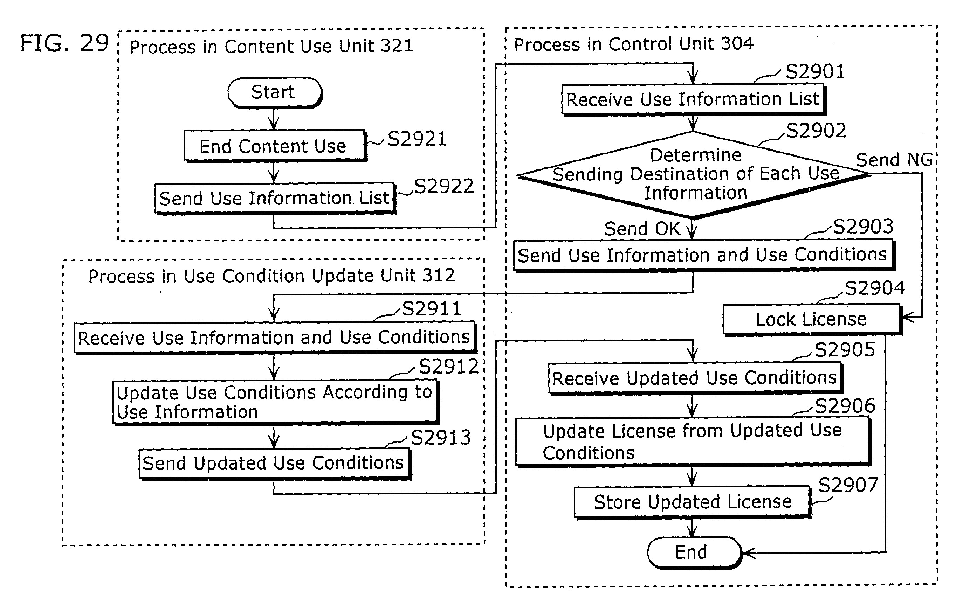

Finally, a process at which the use of content is terminated and the license is updated is explained with reference to FIG. 29.

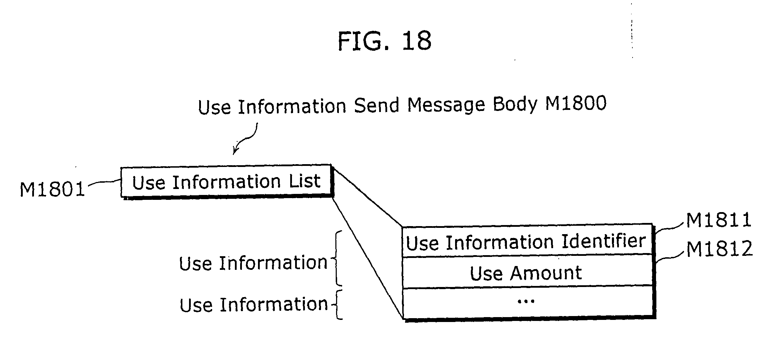

First, a data structure of a communication message relating to the process at which the use of content is terminated is explained with references to FIG. 18 ~ FIG. 20.

A use information send message M1800 in FIG. 18 is composed of a use information list M1801. In here, the use information list M1801 is made up with a list of pairs with use information identifier M1811 and an amount of use M1812 which assigns a value used at the content use unit 321. The same condition of a use availability information identifier of the used use availability is assigned to a condition for the use information identifier M1811.

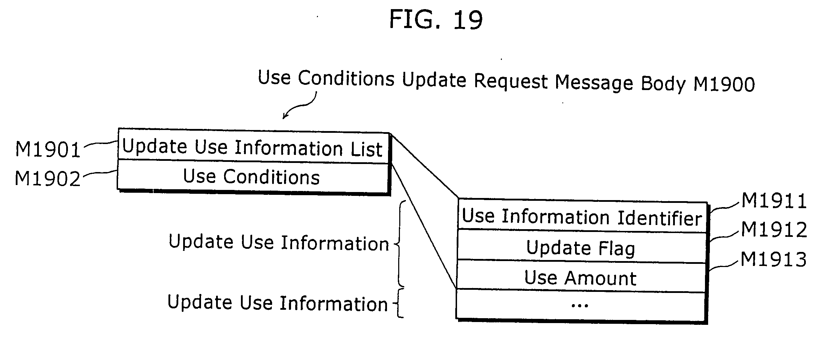

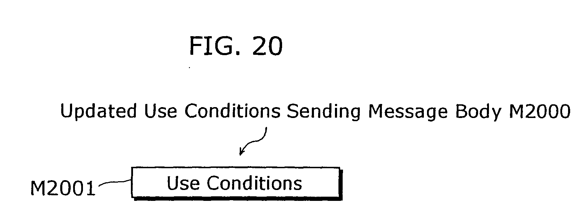

A use conditions update request message M1900 in FIG. 19 is composed of a use information list for update M1901 and use conditions to be updated M1902. In here, the use information list for update M1901 is formed of a list of associations with a use information identifier M1911, an update flag M1912 used for judging whether or not the update is executed or not, and an amount of use M1913. A use conditions send message after updating M2000 in FIG. 20 is composed of use conditions M2001 which are use conditions after the update.

The content use unit 321 counts the number of times and the amount of time that the content is used, while the content is being used. The use of content is terminated according to user operations, a limit of use available time or the like (FIG. 29: Step S2921).

The content use unit 321 generates the use information list M1801 and sends the use information send message to the control unit 304 (FIG. 29: Step S2922).

Here explains about a generation of the use information list M1801 by the content use unit 312. For example, assuming that a content is reproduced once for ten minutes at the content use unit 321, "once" for "the number of reproduction" and "ten minutes" for "reproduction time" are assigned on the use information list M1801.

The control unit 304 receives the use information send message, extracts the use information list M1801 and obtains the use information list M1801 (FIG. 29: Step S2901).

Next, the control unit 304 determines a use condition update unit 312 which sends each use information of the use information list M1801 (FIG. 29: Step S2902).

Here explains a method for determining the use condition update unit 312 in the control unit 304 is explained. In the case of where a use condition update unit 312 which is available for an updating process does not exist in use information identifiers of the use information for the use information list M1801, a lock flag which indicates a temporal unavailability can be established on management information 822 in the license 800, and the control unit 304 can store the use information which cannot be updated, associating with the license (FIG. 29: Step S2904). The use condition judgement unit 311, in the process of interpreting a license when a content is used, judges the use condition 823 as temporally unavailable when the lock flag is established, and determines that the use of content is unavailable. Note that, use conditions with a lock flag become available for use as usual if an updating process for use conditions is correctly performed removing the lock flag by updating use conditions based on associating stored use information when an update of the use conditions become available.

Furthermore, the control unit 304 or the use condition judgement unit 311 can judge whether or not use conditions can be updated before sending a use control message to the content use unit 312. Also, the content use unit 321 regularly may judge whether or not the use conditions can be updated while the content is being used, and terminate the process when the content use unit 321 judges that the use conditions cannot be updated. Here, an update availability judgement is to affirm whether or not the use condition update unit 312 corresponding to the use availability information list M1702 exists, whether it is possible to communicate, and whether it functions, and to judge whether or not the use conditions can be updated.

A method, by a control unit 304, for determining a use condition update unit 312 which sends use information includes following three methods:

The first method stores a rights management identifier of the use condition judgement unit 311 and sends the rights management identifier to the use condition update unit 312 corresponding to the rights management identifier, the use condition judgement unit 311 sending use availability information assigned to the use availability information list M1702 of the use control information message.

The second method specifies a use condition update unit 312 in which an updating process should be performed, based on a use information identifier included in the use information list M1801, and sends use information to the use condition update unit 312. The method for specifying the use condition update unit 312 based on the use information identifier specifies a use condition update unit 312 as a target to be updated, the use condition update unit 312 being able to interpret a use availability information identifier that matches the use information identifier. The method is realized by the control unit 304 by holding a correspondence table, or by making inquiry as needed. With this method, the updating process may be performed at all targeted use condition update units 312, or may be performed only at specified use condition update units 312.

The third method sends the use information list M1801 to all use condition update unit 312 which can be updated and specifies the use information which performs the updating process based on the use information identifier M1811 in the use condition update unit 312.

The use condition update units 312 that perform an updating process can be selected by priority information or a service identifier/ rights management identifier correspondence table.

The control unit 304 sends a use conditions update request message M1900 to a use condition update unit 312, the use conditions update request message M1900 including the use information and the use conditions targeted for an update by the use information (FIG. 29: Step S2903).

The use condition update unit 312 extracts and obtains a use information list for update M1901 and use conditions M1902, the use condition update unit 312 receiving the use conditions update request message M1900 (FIG. 29: Step S2911).

The use condition update unit 312 performs an updating process for the use conditions M1902 based on the use information list for update M1901 (FIG. 29: Step S2912).

Here, the use information for update in the use information list for update M1901 is interpreted one by one. First, the use condition update unit 312 judges from the update flag whether or not an updating process is performed. When the use condition update unit 312 judges the updating process as unnecessary, the updating process by the use information is not performed.

The control unit 304 establishes the update flag which, for example, is used by making the corresponding update flag off when the process in the content use unit 321 may not correct. The update flag can be established on a license 800.

When the update unit 312 judges to perform an updating process by making an update flag ON, the update unit 312 extracts a use information identifier M1911 of the use information for update and specifies the use availability information to be updated from use conditions by using the use information identifier M1911 as a key.

The use availability information to be updated is the use availability information which the use information identifier M1911 corresponds to the use availability information identifier 831 on the license 800. Specifically, "three times" is assigned to "the number of reproduction times" as use information and "10 times" is assigned to "the number of reproduction availability" as use availability information. In this case, an item "the number of reproduction availability", which is one of the use availability information for the use conditions M1902, is subtracted to "seven times" and updated.

Further, the number of times which a content is used can be added to the number of reproduction availability as the maximum value for the number of times which the content can be used. Specifically, the above mentioned example indicates "the maximum number of reproduction availability: 10 times" and "the number of reproduction: three times".

The use condition update unit 312 performs the same process as described above for every use information for update on the use information list for update M1901 to perform an updating process for the use conditions M1902. The use condition update unit 312 sends a use conditions send message after update to the control unit 304, the use conditions send message after update including the use conditions M2001 that is the use conditions after the update (FIG. 29: Step S2913).

The control unit 304 receives the use conditions send message after the update from the use condition update unit 312, extracts and obtains the use conditions (FIG. 29: Step S2905). The control unit 304 updates the license from the received plurality of use conditions (FIG. 29: Step S2906).

Here explains a method for the control unit 304 to update the license by using the received plurality of use conditions.

The control unit 304 receives the use conditions send message after update and stores a rights management identifier and use conditions M2001 by associating each other, the rights management identifier and the use conditions M2001 belonging to the use condition update unit 312 which sends the use conditions send message after update. The control unit 304 searches and specifies the information for respective rights management that matches the rights management identifier in the license 800 before update.

When the information for each rights management cannot be identified because the rights management identifier, in the license 800, duplicates or matched rights management identifier does not exist, the license cannot be used by considering the license as unauthorized when the rights management identifier duplicates, and considering the content use process as unauthorized when the matched rights management identifier does not exist.

The control unit 304 rewrites and updates use conditions 823 for the rights management identifier by the use conditions M2001 when the rights management-specific information can be specified. The control unit 304 performs the same process for every received use conditions send message after update to perform an update process for the license.

The control unit 304 stores the updated license into the license storing unit 303 (FIG. 29: Step S2907).

Here explains a process for a terminal apparatus 300 to verify validity of the use condition judgement unit 311, the use condition update unit 312 and the content use unit 321. The use condition judgement unit 311, the use condition update unit 312 and the content use unit 321 can be added and changed by plug-in and tamper resistant module. In here, plug-in is a small program for adding functions and the tamper resistant module is a recording medium which the tamper resistant is realized in hard ware mechanism, the recording medium recording the program.

In other words, the validities of each processing unit such as whether the processing unit is trustworthy, whether the processing unit is the latest unit and the like are not guaranteed, the each processing unit including the use condition judgement unit 311, the use condition update unit 312 and the content use unit 321 due to the possibility in each unit to be changed.

Therefore, in the case where the use condition judgement unit 311, the use condition update unit 312 and the content use unit 321 communicate each other, the control unit 304 may need to verify whether a processing unit can be trustworthy or not.

The verification process is specifically explained. In general, it is common to establish a SAC to communicate safely when data such as the license 800 which requires security are exchanged. Therefore, a SAC is established between a license generation server 100 and the terminal apparatus 300. Similarly, at the terminal apparatus 300, the control unit 304 establishes a SAC among the use condition judgement unit 311, the use condition update unit 312 and the content use unit 321.

Establishing a SAC can use, for example, SSL (Secure Socket Layer) and TLS (Transport Layer Security).

The followings are specific examples of timing at which the verification process is performed inside the terminal apparatus 300.

The verification process is performed when the control unit 304 sends a use condition judgement request message to the use condition judgement unit 311:
when the control unit 304 receives a judgement result send message from the use condition judgement unit 311;
when the control unit 304 sends a use conditions update request message to the use condition update unit 312;
when the control unit 304 receives a use conditions send message after update from the use condition update unit 312;
when the control unit 304 sends a content use control message to the content use unit 321; and
when the control unit 304 receives a use information send message from the content use unit 321.

Note that when it is guaranteed that a processing unit can trust on each other, the verification process is not necessary.

The control unit 304 also verifies whether or not each processing unit such as the use condition judgement unit 311 and use condition update unit 312 are the latest. The terminal apparatus 300 obtains information for judging whether each processing unit is the latest or not (hereafter referred to as latest judgement information) from a terminal processing unit management server which manages each processing unit in the terminal apparatus 300.

The latest judgement information, for example, is generation information which indicates the latest age of each processing unit. The age information is an example of a collection which determines small or large between two elements in a relationship when arbitral two elements are obtained. More specifically, a version is explained as one of the example, the version increasing a value monotonously every time when each processing unit changes.

It is assumed that the terminal apparatus 300 obtains the next latest judgement information from the terminal processing unit management server and holds the obtained information. The latest version of the use condition judgement unit of the rights management identifier "100A" is "5".

The control unit 304 makes an inquiry about a version to a use condition judgement unit 311a when it communicates with the use condition judgement unit 311a. In the case where the version of the use condition judgement unit 311a is "4" or smaller, the use condition update unit 312a is judged that it needs to be updated. While in the case where the version is "5" or larger, it is judged that the update is not necessary.

Note that, when the version of the use condition judgement unit 311a is "6" or larger, a judgement says that unauthorized action is performed so that the use condition judgement unit 311a can be revoked.

When the terminal apparatus 300 judges that the use condition judgement unit 311a needs to be updated, the terminal apparatus 300 can connect regularly to the terminal processing unit management server and obtain the latest judgement information. Also, the terminal apparatus 300 can perform an update judgement for each processing unit at the timing when the latest judgement information is obtained.

Thus, the control unit 304 verifies a validity of each processing unit when it communicates with each processing unit.

As above described, the present embodiment is a content distribution system in which a license 800 has a same structure as that of the license 2100. In an environment where a plurality of rights management methods are found, the terminal apparatus 300 in the system can obtain a content from the content distribution server 200 and a license from the license generation server 100, starts and ends the use of content.

### (Second Embodiment)

The following explains in detail about the second embodiment according to the present invention with reference to diagrams. An overall structure of a content distribution system according to the present embodiment is same as that of the content distribution system S according to the first embodiment shown in FIG. 1 as well as fundamental structures of each server and terminal apparatus in the present content distribution system. Therefore, those explanations are omitted and the following explains the differences with the first embodiment.

The present embodiment differs with the first embodiment in a data structure of a license. Firstly, the data structure of a license in the present embodiment is explained. Then, a difference in a process concerning a license according to the difference of the data structure is explained.

The license 800 according to the present embodiment has a structure which does not allow a duplication of an item of the use availability information that is changeable in the use conditions 823 for rights management-specific information on the rights management-specific information list 802. In the case where an item of changeable use availability information exists in a plurality of rights management-specific information, that is, where the item of changeable use availability information is controlled by the plurality of rights management methods, a value is assigned in rights management common information in which stores a particular value indicating that the duplicated item is common to all rights management method as a rights management identifier.

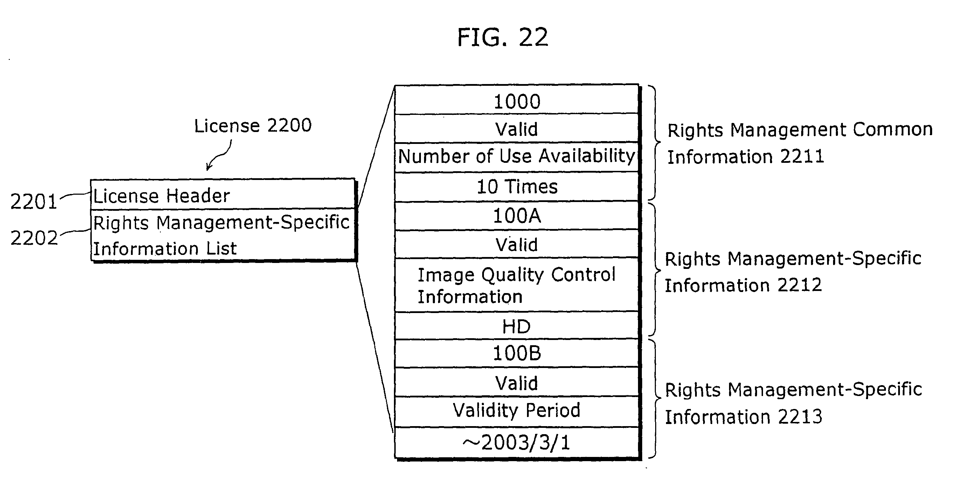

Specifically, a license 2200 made up with a rights management method A and a rights management method B is explained with reference to FIG. 22, the rights management method A managing "the number of use availability" and "image quality control information", and the rights management method B managing "the number of use availability" and "validity period".

On the rights management-specific information list 2202, the rights management common information 2211 exists, a particular value "1000" is assigned to a rights management identifier, the particular value being information common to all rights management method, and "the number of use availability" is assigned to the use availability information, the number of use availability concerning both the rights management method A and the rights management method B. On the rights management-specific information 2212, "100A" indicating the rights management method A is assigned to the rights management identifier, "image quality control information" is assigned to the use availability information, the "image quality control information" removing "the number of use availability" included in the rights management common information 2211 from use availability information managed by the rights management method A. On the rights management-specific information 2213, similarly "100B" is assigned to the rights management identifier and "validity period" is assigned to the rights availability information.

Next, a difference in a process with the first embodiment for each process is explained.

The process for a terminal apparatus 300 to obtain a content from the content distribution server 200 is same as that described in the first embodiment. The process of which the terminal apparatus 300 obtains a license from the license generation server 100 is different in a process at the license generation unit 102 when the use availability information is duplicated. The process at which the terminal apparatus 300 starts using the content requires a selection process at the use condition judgement unit where interprets rights management common information when the license 800 includes rights management common information.

The process at which the terminal apparatus 300 terminates the use of content requires a selection process at the use condition update unit where interprets rights management common information when the license 800 includes the rights management common information. Firstly, a difference with the first embodiment in the license obtaining process is explained with reference to FIG. 27. Note that, the step except Step S2715 is same as that described in the first embodiment. Therefore, the explanations are omitted.

Here explains a process of generating a license from the use conditions and the content key at the Step S2715. Specifically, the case where the license generation unit 102 receives "10 times" for "the number of use availability" and "image quality control information" from the use condition generation unit 110a and receives "20 times" for "the number of use availability" and "~2003/3/1" for the "validity period" from the use condition generation unit 110b is explained.

The present embodiment does not permit to have a duplication of an item in changeable use availability information. Therefore, the duplicated "number of use availability" over two use conditions need to be complied as the rights management common information. Also, when the values of two use availability information 832 differ, the value which has a narrower right or the value which has a broader right is assigned. In here, the narrower right, "10 times" is assigned for an explanation.

Thus, on the rights management common information 2211, "1000" indicating rights management common information is assigned to the rights management identifier 821, "the number of use availability" is assigned to the use availability information identifier 831, and "10 times" is assigned to the use availability information 832.

The items are assigned to the rights management-specific information, the items removing items of the use availability information included in the rights management common information 2211 from items of the use availability information controlled by each rights management method. Specifically, on the rights management-specific information 2212, "100A" indicating the rights management method A is assigned to the rights management identifier 821, "image quality control information" is assigned to the use availability information identifier 831, and "HD" is assigned to the use availability information 832. Also, on the rights management-specific information 2213, "100B" indicating the rights management method B is assigned to the rights management identifier 821, "validity date" is assigned to the use availability information identifier 831, and "~2003/3/1" is assigned to the use availability information 832.

Moreover, a rights management identifier of a rights management method for interpreting the rights management common information 2211 at the terminal apparatus 300 is assigned to the control identification information 813. Specifically, it is assigned as described as "use condition judgement: 100B" and "use conditions update: 100B".

Next, differences with the first embodiment in the process at which the use of content is started at the terminal apparatus 300 are explained with reference to FIG. 28. The processes except Step S2802 and Step S2806 are same as those of first embodiment. Therefore those explanations are omitted.

Firstly, a process for determining a destination of each use condition at Step S2802 is explained. Specifically, the case where the rights management common information 2211 exists on the license 2200 obtained by the control unit 304 is explained.

The control unit 304 performs a predetermined process for each rights management information as explained in the first embodiment. When "1000" is assigned to the rights management identifier, the control unit 304 indicates the rights management information as the rights management common information 2211 and performs a different process as for other rights management information. The control unit 304 extracts a rights management identifier of the rights management method for judging use conditions for the rights management common information 2211 from the control identification information 813. Here explains as "use condition judgement: 100B" is assigned to the control identification information 813. The control unit 304 sends the rights management common information 2211 to the use condition judgement unit 311b and judges the use conditions, the use condition judgement unit 311b being a use condition judgement unit corresponding to the rights management identifier "100B". The process at the use condition judgement unit 311b which receives the rights management common information 2211 is same as the process of the information for each rights management.

Next, the process of sending content use control information at Step S2806 is explained. The process of generating a use control message is as explained in the first embodiment. The control unit 304 memorizes the use availability information identifier included in the rights management common information 2211 when it generates the use control message. Specifically, information such as "use management common information: the number of use availability" is memorized.

Next, the difference with the first embodiment in the process at which the use of content is terminated at the terminal apparatus 300 is explained with reference to FIG. 29. The processes other than Step S2902 are same as those in the first embodiment. Therefore those explanations are omitted.

The process of determining a destination of each use information at Step S2902 is explained. Specifically, the case where a use availability information identifier included in the rights management common information 2211 exists on the use information list M1801 obtained by the control unit 304 is explained.

The control unit 304 performs a predetermined process for each use information on the use information list M1801 as explained in the first embodiment. The control unit 304 performs a different process when the use availability information identifier and the use information identifier match, the use availability information identifier being included in the rights management common information 2211 memorized when the use of content is started. The control unit 304 extracts a rights management identifier from the control identification information 813, the rights management identifier being for the rights management method which updates use conditions for the rights management common information 2211. Here explains as "use conditions update: 100B" is assigned to the control identification information 813.

Note that a judgement and an update of the use conditions included in the rights management common information 2211 can be always performed at determined use condition judgement unit 311 and the use condition update unit 312. In this case, the control identification information 813 does not need to include the rights management identifier. Moreover, the control identification information 813 may include the use condition judgement unit 311 and the use condition update unit 312 which judge and update only rights management common information.

The control unit 304 sends the use information to the use condition judgement unit 312b and updates the use conditions, the use condition judgement unit 312b being a use condition update unit corresponding to a rights management identifier "100B". The process at the use condition update unit 312b which received the use information is same as the processes for other use information.

As above described, the present embodiment is a content distribution system S in which the license 800 has the structure of the license 2200. In an environment where a plurality of rights management methods exists, the terminal apparatus 300 can obtain a content from the content distribution server 200, obtain a license from the license generation server 100, start and end the use of content. That is, the content distribution system can respond to various business models in the content distribution business.

In the first embodiment and the second embodiment, two rights management methods associate each other to control the use of content at a terminal apparatus, two rights management methods being a rights management method A provided by Maker α and a rights management method B provided by Maker β . In the case where three or more rights management methods associate each other, the same process can be taken.

In addition, by using priority information, the use of content is controlled exclusively by the plurality of rights management methods at a terminal apparatus 300. Thus, an operation which is not affected by each rights management method can be performed. In other words, the plurality of rights management methods can coexist independently one another.

Here explains about a content distribution system SS that is an example of a content distribution system S in which Maker *α* and Maker β associate each other and perform rights management, the Maker α and Maker β providing rights management methods.

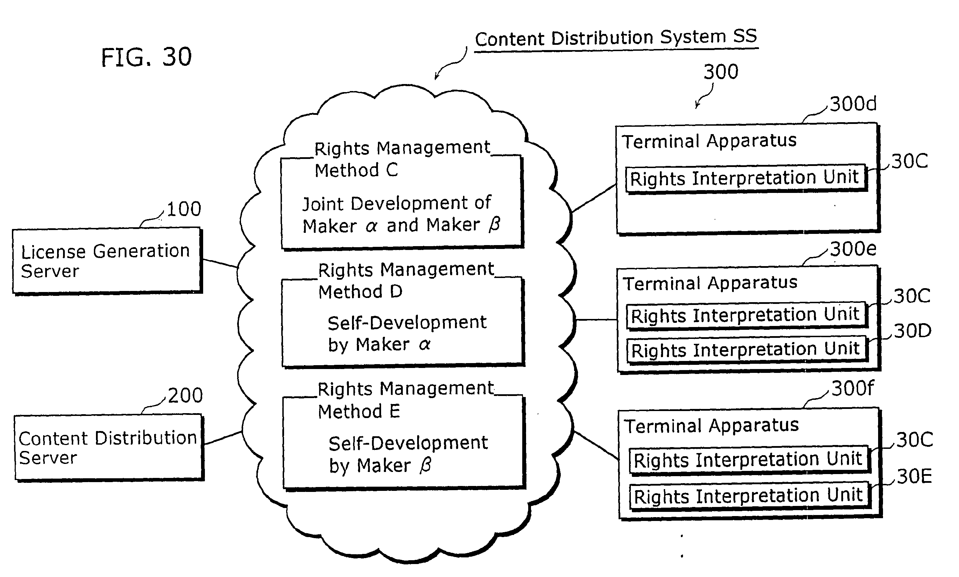

FIG. 30 is a diagram showing a structural example of the content distribution system SS. In here, a rights management method in the content distribution system SS includes a rights management method C developed jointly by Maker α and Maker β , a rights management method D developed entirely by Maker α , and a rights management method E developed entirely by Maker β . In addition, all terminal apparatuses belong to the content distribution system SS at least hold or can control a rights interpretation unit 30C that is a rights interpretation unit corresponding to the rights management method C.

Here, a rights interpretation unit 30D held in a terminal apparatus 300e is a rights interpretation unit corresponding to the rights management method D, and a rights interpretation unit 30E held in a terminal apparatus 300f is a rights interpretation unit corresponding to the rights management method E.

As an example of operation forms in the content distribution system SS, following two cases are explained.

The first case is where the content can be used at a terminal apparatus 300d which holds only the rights interpretation unit 30C as the rights interpretation unit. For example, it is a case where the rights management method C is disclosed to the public and Maker γ which is neither Maker α nor Maker β can generate a terminal apparatus 300. Moreover, at the terminal 300e and the terminal 300f which hold the terminal interpretation unit 30D and the terminal apparatus 30E, the use of content is controlled based on the rights management method D and the rights management method E. In this case, it is assumed that an item of use availability information is duplicated, the use availability information being controlled by the rights management method C, the rights management method D and the rights management method D. Specifically, it is a case where a validity period "~2002/12/24" is assigned to the use availability information of the rights management method C, and a validity period "~2003/02/13" is assigned to the use availability information of the rights management method D.

In this case, the terminal apparatus 300D which holds only the rights interpretation unit 30c can use content until "~2002/12/24", while the terminal apparatus 300E which further holds the rights interpretation unit 30D is operable to use content until "~2003/02/13". In this case, a use permission judgement based on a judgement result at Step S2805 performs OR process, and the use availability information controls to prioritize the rights management method D. Note that it is more suitable for the license 800 to have the data structure explained in the first embodiment due to the duplication in the use availability information.

The second case is where a functional duplication is removed in the plurality of rights interpretation units. For example, it is the case where the rights management method C includes an item of use availability information controlled jointly by Maker α and Maker *β ,* the rights management method D is a rights management method extended entirely by Maker α, and the rights management method E is a rights management method extended entirely by Maker β .

In this case, it is not assumed to have a duplication of an item of the use availability information controlled by the rights management method D and the rights management method E. Specifically, a validity period "~2002/12/24" is assigned to the use availability information of the rights management method C and the number of use availability "10 times" is assigned to the use availability information of the rights management method D. In here, a "validity period" is an item of use availability information controlled jointly by Maker α and Maker *β .*

Moreover, when the judgement result of the rights interpretation unit 30C permits the use of content but the use of content is not permitted on the rights management method for the self-extension, it is assumed that the control unit 304 does not permit the use of content. In this case, the terminal apparatus 300e which holds the rights interpretation unit 30C and the rights interpretation unit 30D can use the content until "~2002/12/24". However, the content cannot be used when the number of use availability is "0 times". In this case, a use permission judgement judges to perform AND process, the use permission judgement being based on the judgement result at Step S2805. Note that it is more suitable for the license 800 to have the data structure explained in the second embodiment.

Next, a case is explained, the case being where the rights management method A provided by Maker α is extended and items controllable at terminal apparatuses are added and changed.

There are two methods for extending the rights management method A.

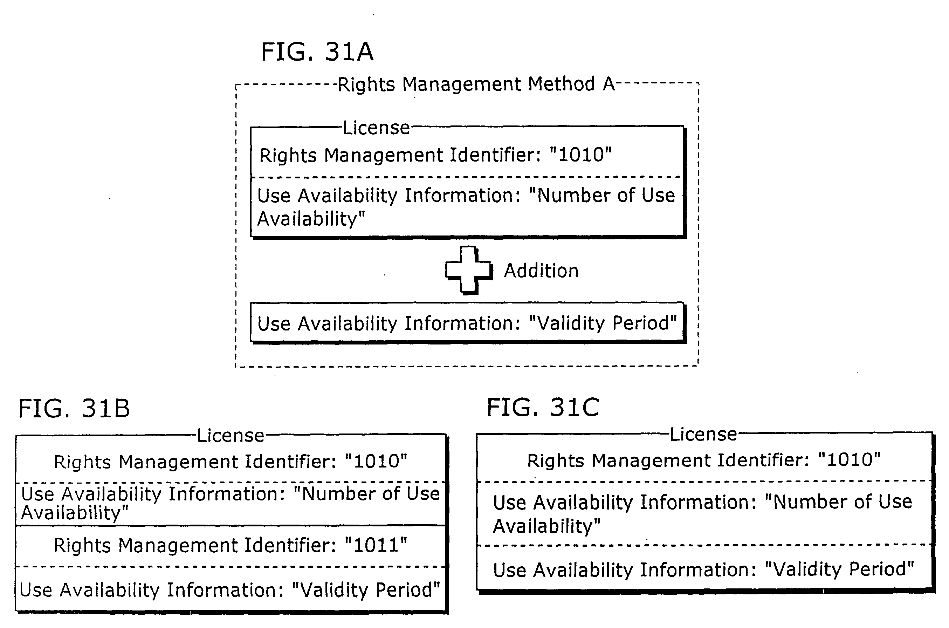

FIGS. 31A ~31C are diagrams to explain those methods. As an example, a method is shown as indicated in FIG. 31A, the method being used for the case where a control of "validity period" is added to the rights management method (rights management identifier "1010") which conventionally controlled "the number of reproduction availability".

The first method is a method, like a license structure shown in FIG. 31B, for adding control availability items as other rights management identifier to the above mentioned structure. In the above mentioned example, for example, "validity period" can be controlled on a rights management method of the rights management identifier "1011". The rights management method can be extended by adding control availability items as a plug-in for the rights management identifier "1011" to the rights generation unit at the license generation server 100 and the rights interpretation unit at the terminal apparatus 300. In this case, the rights management method having the number of first three digits as "101" can be operated as Maker α manages the method.

The second method is a method, as a license structure shown in FIG. 31C, for adding control availability items, updating the conventional rights management method, and changing the rights management method having the above mentioned structure. In the above mentioned example, "validity period" can be controlled on the rights management method of the rights management identifier "1010" and the conventional rights management method is changed. The rights management method can be extended by updating the rights interpretation unit at the terminal apparatus 300 and the rights generation unit at the license generation server 100.

The above mentioned two methods can be realized by extending using the easiest process out of the change process and the add process at the rights interpretation unit. That is, in the case where control items for the use of content at a terminal apparatus is extended, the content distribution system S can extend the use control information of a content only by changing and adding the rights interpretation unit which is operable to interpret control items to be extended at the terminal apparatus.

Note that, the control unit 304 can control a use condition judgement unit 311, a use condition update unit 312, and a content use unit 321a that belong to the other terminal apparatus 300 which is different from the terminal apparatus 300 that the control unit 304 belongs to. The control unit 304 can also perform a verification of validity at the time of communication for this case. Up to this point, the content use management system according to the present invention is explained based on the embodiments. However, the present invention is not limited its use to those embodiments.

For example, in the embodiments, content is distributed from a content distribution server 200 to a terminal apparatus 300. However, the method for storing the content into the content storing unit 305 in the terminal apparatus 300 is not limited to such communication. Therefore, contents can be stored, the content being readout from a recording medium such as CD-ROM equipped to a removal disk and the like which terminal apparatuses have.

Moreover, in the present embodiments, the content distribution system which has a content distribution function. However, the content use management system according to the present invention is not necessary to have the content distribution function. It is because the feature of this invention is not to distribute contents, but to manage the use of content at a terminal apparatus.

### INDUSTRIAL APPLICABILITY

The present invention can be used as a content use system and the like wherein a server apparatus, via a communication network such as broadcasting network and the Internet, distributes a license for digital contents such as image and music; and terminal apparatuses use digital contents based on a distributed license, and especially as a digital copyrighted work use system and the like wherein the terminal apparatuses can use various digital contents while protecting copyrights of the digital contents in an environment where a plurality of rights management method exist.

## Claims

1. A content use management system comprising a terminal apparatus and a server apparatus that is connected to the terminal apparatus through a communication channel, the terminal apparatus using a content which is a digital copyrighted work, and the server apparatus managing the use of said content by the terminal apparatus,
wherein the server apparatus includes:
a use condition generation unit operable to generate use condition information which indicate use conditions for a content, by associating said use condition information respectively with a plurality of rights management methods which has a different method of managing rights for using said content;
a content key storing unit operable to store a content key which is required for the terminal apparatus to use said content;
a license generation unit operable to generate license information based on the use condition information generated by the use condition generation unit and the content key stored in the content key storing unit, the content key being associated with said use condition information, the license information indicating a license for permitting the use of said content corresponding to the content key under the use conditions indicated in said use condition information;
a license distribution unit operable to distribute the generated license information to the terminal apparatus, and
the terminal apparatus includes:
a license storing unit operable to obtain the license information distributed from the server apparatus and store the license information;
a use condition judgement unit operable to judge whether or not the use of a content indicated in the license information is permitted based on the use conditions indicated in the license information stored in the license storing unit;
a content use unit operable to decrypt said content with the content key included in the license information and use said content according to the use conditions included in the license information when it is judged by the use condition judgement that the use of said content is permitted; and
a use condition update unit operable to update, when said content is used by the content use unit, the use conditions in association with said use, the use conditions being indicated in the license information stored in the license storing unit.

2. The content use management system according to Claim 1,
wherein the license generation unit generates the license information that include a rights management identifier for identifying a rights management method corresponding to the use condition information,
the use condition judgement unit judges whether or not the use of said content is permitted according to the rights management method indicated by the rights management identifier included in the license information, and
the use condition update unit updates the use conditions according to the rights management method indicated by the rights management identifier included in the license information.

3. The content use management system according to Claim 2,
wherein the license generation unit generates the license information by generating the rights management identifier and the corresponding use condition information as a pair.

4. The content use management system according to Claim 1,
wherein the use condition judgement unit has a plurality of use condition judgement units operable to judge whether or not the use of a content is permitted according respectively to the plurality of rights management methods, and
the use condition update unit has a plurality of use condition update units operable to update the use conditions according respectively to the plurality of rights management methods.

5. The content use management system according to Claim 1,
wherein the use condition generation unit generates a plurality of use condition information items, for a same content, corresponding respectively to the plurality of rights management methods.

6. The content use management system according to Claim 5,
wherein the use condition information includes use availability information which indicates a permitted extent of use of a content, and
the use condition generation unit generates the plurality of use availability information items to avoid a duplication of a same kind of use availability information items in the plurality of use condition information items when the use condition generation unit generates, for the same content, the plurality of use condition information items corresponding respectively to the plurality of rights management methods.

7. The content use management system according to Claim 5,
wherein the use condition information includes use availability information which indicates a permitted extent of use of a content, and
the use condition generation unit generates the plurality of use condition information items including a same kind of use availability information items duplicated in the plurality of use condition information items when the use condition generation unit generates, for the same content, the plurality of use condition information items corresponding respectively to the plurality of rights management methods.

8. The content use management system according to Claim 7,
wherein the use condition judgement unit judges whether or not the use of said content is permitted by prioritizing the use availability information included in the use condition information corresponding to a rights management method with a higher priority according to predetermined priorities of the rights management methods, when the plurality of use condition information items in the license include a duplication of a same kind of use availability information items regarding the same content.

9. The content use management system according to Claim 8,
wherein the license generation unit generates the license information that include priority information which indicates the priorities of the plurality of rights management methods, and
the use condition judgement unit judges whether or not the use of said content is permitted by prioritizing the use availability information included in the use condition information corresponding to a rights management method with a higher priority according to a priority indicated in the priority information, when the plurality of use condition information in the license include a duplication of a same kind of use availability information items regarding the same content.

10. The content use management system according to Claim 7,
wherein the use condition judgement unit i ) generates a plurality of judgement results by judging whether or not the use of said content is permitted based respectively on the plurality of use availability information items and ii ) judges whether or not the use of said content is permitted by performing a predetermined computation on the generated plurality of judgement results, when the plurality of use condition information items in the license include a duplication of a same kind of use availability information items regarding the same content.

11. The content use management system according to Claim 10,
wherein the license generation unit generates the license information by including control identification information in the license information, the control identification information indicating a computation method for the case where the plurality of judgement results for the use permission regarding the same content is obtained, and
the use condition judgement unit i ) generates a plurality of judgement results by judging whether or not the use of said content is permitted based respectively on the plurality of use availability information items, and ii ) judges whether or not the use of said content is permitted by performing the computation method indicated in the control identification information to the generated plurality of judgement results, when the plurality of use condition information items in the license include a duplication of a same kind of use availability information items regarding the same content.

12. The content use management system according to Claim 5,
wherein the use condition information includes use control information which indicates a manner for using a content, and
the content use unit uses said content in the manner indicated in the use control information by prioritizing the use control information included in the use condition information corresponding to a rights management method with a higher priority, according to predetermined priorities of the rights management methods when the plurality of use condition information items in the license include different use control information regarding the same content.

13. The content use management system according to Claim 12,
wherein the license generation unit generates the license information that include priority information which indicates priorities of the plurality of rights management methods, and
the content use unit prioritizes the use control information included in the use condition information corresponding to a rights management method which has a higher priority according to the priorities indicated in the priority information, and uses the content in the condition indicated in the use control information when the plurality of use condition information items in the license includes different use control information regarding the same content.

14. The content use management system according to Claim 5,
wherein the content use unit determines one use manner by performing a computation to the plurality of use conditions corresponding respectively to the plurality of use control information in the determined use manner when the plurality of use condition information items in the license includes different use control information regarding the same content.

15. The content use management system according to Claim 14,
wherein the license generation unit generates the license information by including control identification information which indicates a computation method for the case where the plurality of use manners regarding the same content are obtained, and
the content use unit determines one use manner by performing a computation indicated in the control identification information to the plurality of use manners corresponding respectively to the plurality of use control information items when the plurality of use condition information items in the license includes different use control information regarding the same content.

16. The content use management system according to Claim 1,
wherein the use condition generation unit has a plurality of use condition generation units which generate use condition information according respectively to the plurality of rights management methods, and
the license generation unit generates license information including use condition information generated by one or more use condition generation units in the plurality of use condition generation units.

17. The content use management system according to Claim 1,
wherein the terminal apparatus further includes a license issue request unit operable to request the server apparatus to issue the license.

18. The content use management system according to Claim 17,
wherein the use condition judgement unit has at least one of use condition judgement units operable to judge whether or not the use of said content is permitted according to at least one of the plurality of rights management methods,
the use condition generation unit has a plurality of use condition generation units operable to generate the use condition information according respectively to the plurality of rights management methods, and
the license generation unit generates the license including the use condition information generated by the use condition generation unit corresponding to the use condition judgement unit included in the terminal apparatus when receiving the request of issuing a license from the terminal apparatus.

19. The content use management system according to Claim 1, comprising a plurality of said terminal apparatuses,
wherein each of the use condition judgement units of the plurality of said terminal apparatuses has a use condition judgement unit operable to judge whether or not the use of said content is permitted according to at least one predetermined rights management method out of the plurality of rights management methods.

20. The content use management system according to Claim 19,
wherein each use condition update unit of the plurality of terminal apparatuses has a use condition update unit operable to update the use conditions according to at least one predetermined rights management method out of the plurality of rights management methods.

21. A content use management apparatus that manages the use of a content, which is a digital copyrighted work, by a terminal apparatus that is connected to the terminal apparatus through a communication channel, comprising:
a use condition generation unit operable to generate use condition information which indicate use conditions for a content, by associating said use condition information respectively with a plurality of rights management methods which has a different method of managing rights for using the content;
a content key storing unit operable to store a content key required for the terminal apparatus to use the content;
a license generation unit operable to generate license information based on the use condition information and the content key, the license information indicating a license which permits a use of a content corresponding to the content key under the use conditions indicated in the use condition information, the use condition information being generated by the use condition generation unit, and the content key being stored in the content storing unit corresponding to the use condition information; and
a license distribution unit operable to distribute the generated license information to the terminal apparatus.

22. A content use apparatus that uses a content which is a digital copyrighted work, comprising:
a license storing unit operable to obtain license information distributed from a server apparatus and store the license information;
a use condition judgement unit operable to judge whether or not the use of said content indicated in the license information is permitted based on use conditions indicated in the license information stored in the license storing unit;
a content use unit operable to (1) decrypt the content with a content key included in the license information and (2) uses said content according to use conditions included in the license information when it is judged that the use of said content is permitted by the use condition judgement unit; and
a use condition update unit operable to update, when the content is used by the content use unit, the use conditions in association with said use, the use conditions being indicated in the license information stored in the license storing unit,
wherein the license information includes a rights management identifier for identifying one rights management method out of a different plurality of rights management methods;
the use condition judgement unit judges whether or not the use of said content is permitted according to the rights management method indicated by the rights management identifier included in the license information; and
the use condition update unit updates the use conditions according to the rights management method indicated by the rights management identifier included in the license information.

23. A content use management method used in a system comprising a terminal apparatus and a server apparatus that is connected to the terminal apparatus through a communication channel, the terminal apparatus using a content which is a digital copyrighted work, and the server apparatus managing use of the content by the terminal apparatus, the content use management method comprising steps A executed in the server apparatus and steps B executed in the terminal apparatus,
wherein the steps A include:
a use condition generation step of generating use condition information which indicates use conditions for a content, by associating said use condition information respectively with a plurality of rights management methods which has a different method of managing rights for using the content;
a license generation step of generating license information based on the use condition information and a content key, the license information indicating a license which permits the use of the content corresponding to the content key under the use conditions indicated in the use condition information, the use condition information being generated at the use condition generation step, and the content key being stored in the content key storing unit in association with the use condition information;
a license distribution step of distributing the generated license information to the terminal apparatus,
wherein the steps B include:
a license storing step of obtaining the license information to be distributed from the server apparatus and storing the license information;
a use condition judgement step of judging whether or not the use of the content is permitted indicated in the license information based on the use conditions indicated in the license information stored in the license storing step;
a content use step of decrypting the content with the content key included in the license information and using the content according to the use conditions included in the license information when the use of the content is permitted at the use condition judgement step; and
the use condition update step of updating, when the content is used, the use conditions in association with said use, the use conditions being indicated in the license information stored at the license storing step.

24. A content use management method by a server apparatus which is connected to a terminal apparatus through a communication channel and manages use of a content by the terminal apparatus, the content being a digital copyrighted work, the content use management method, comprising:
a use condition generation step of generating use condition information which indicates use conditions for the content by associating said use condition information respectively with a plurality of rights management methods which has a different method of managing rights for using the content;
a license generation step of generating license information based on the use condition information generated at the use condition generation step and a content key corresponding to the use condition information, the license information indicating a license which permits the use of the content corresponding to the content key under the use conditions indicated in the use condition information; and
a license distribution step of distributing the generated license information to the terminal apparatus.

25. A content use method by a terminal apparatus that uses a content which is a digital copyrighted work, comprising:
a license obtainment step of obtaining license information to be distributed from a server apparatus;
a use condition judgement step of judging whether or not the use of a content is permitted indicated in the license information based on use conditions indicated in the obtained license information;
a content use step of decrypting the content with a content key included in the license information and using the content according to the use conditions included in the license information when the use of the content is permitted at the use condition judgement step; and
a use condition update step of updating, when the content is used at the content use step, the use conditions indicated in the license information stored at the license storing step in association with said use,
wherein the license information includes a rights management identifier for identifying one rights management method out of a different plurality of rights management methods,
the use condition judgement step judges whether or not the use of the content is permitted according to the rights management method indicated by the rights management identifier included in the license information, and
the use condition update step updates the use conditions according to the rights management method indicated by the rights management identifier included in the license information.

26. A program for a server apparatus which is connected to a terminal apparatus through a communication channel and manages a use of a content by the terminal apparatus, the content being a digital copyrighted work, the program comprising:
a use condition generation step of generating use condition information which indicates use conditions for a content by associating said use condition information respectively with a plurality of rights management methods which has a different method of managing rights for using the content;
a license generation step of generating license information based on the use condition information generated at the use condition generation step and a content key corresponding to the use condition information, the license information indicating a license which permits the use of the content in association with the content key under the use conditions indicated in the use condition information; and
a license distribution step of distributing the generated license information to the terminal apparatus.

27. A program for a terminal apparatus to use a content which is a digital copyrighted work, comprising:
a license obtainment step of obtaining license information to be distributed from a server apparatus;
a use condition judgement step of judging whether or not the use of a content is permitted indicated in the license information based on use conditions indicated in the obtained license information;
a content use step of decrypting the content with a content key included in the license information and using the content according to the use conditions included in the license information when the use of content is permitted at the use condition judgement step; and
a use condition update step of updating, when the content is used at the content use step, the use conditions indicated in the license information stored at the license storing step in associating with said use, and
wherein the license information includes a rights management identifier for identifying one rights management method out of a different plurality of rights management methods,
the use condition judgement step judges whether or not the use of the content is permitted according to the rights management method indicated by the rights management identifier included in the license information, and
the use condition update step updates the use conditions according to the rights management method indicated by the rights management identifier included in the license information.
